# FASCICULE DE BREVET EUROPEEN

(11) **EP 3 649 787 B1**
(45) Date de publication et mention de la délivrance du brevet: **29.07.2026**
(21) Numéro de dépôt: 18752540.7
(22) Date de dépôt: 28.06.2018
(51) Int. Cl.: H04N 19/597, H04N 19/56, H04N 19/52, H04N 19/176, H04N 19/147, H04N 19/46, H04N 19/13, H04N 19/107, H04N 19/12, H04N 19/167, H04N 19/567, H04N 19/58, H04N 19/593

(54) **PROCÉDÉS ET DISPOSITIFS DE CODAGE ET DE DÉCODAGE D'UN FLUX DE DONNÉES REPRÉSENTATIF D'UNE SÉQUENCE D'IMAGES**
VERFAHREN UND VORRICHTUNGEN ZUM CODIEREN UND DECODIEREN EINES FÜR EINE BILDSEQUENZ REPRÄSENTATIVEN DATENSTROMS
METHODS AND DEVICES FOR ENCODING AND DECODING A DATA STREAM REPRESENTATIVE OF AN IMAGE SEQUENCE

(30) Priorité: 05.07.2017 FR 1756320
(43) Date de publication de la demande: 13.05.2020
(73) Titulaire: Orange, 92130 Issy-les-Moulineaux (FR)
(72) Inventeur: HENRY, Félix, 92326 Châtillon Cedex (FR); JUNG, Joël, 92326 Châtillon Cedex (FR); RAY, Bappaditya, 92326 Châtillon Cedex (FR)
(74) Mandataire: Vidon Brevets & Stratégie
(86) Numéro de dépôt international: PCT/FR2018/051581
(87) Numéro de publication internationale: WO 2019/008255

(56) Documents cités:
- US-A1- 2014 354 771
- SHAN LIU ET AL: "Overview of HEVC extensions on screen content coding", APSIPA TRANSACTIONS ON SIGNAL AND INFORMATION PROCESSING, vol. 4, 1 January 2015 (2015-01-01), XP055454972, DOI: 10.1017/ATSIP.2015.11
- CHEN Y ET AL: "Test Model 11 of 3D-HEVC and MV-HEVC", 11. JCT-3V MEETING; 12-2-2015 - 18-2-2015; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-K1003, 1 May 2015 (2015-05-01), XP030132748
- CHEN Y ET AL: "AHG10: Motion related hooks for HEVC multiview/3DV extension based on long-term reference pictures", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0121, 3 July 2012 (2012-07-03), XP030112483
- SAMELAK JAROSLAW ET AL: "Efficient frame-compatible stereoscopic video coding using HEVC screen content coding", 2017 INTERNATIONAL CONFERENCE ON SYSTEMS, SIGNALS AND IMAGE PROCESSING (IWSSIP), IEEE, 22 May 2017 (2017-05-22), pages 1 - 5, XP033112648, DOI: 10.1109/IWSSIP.2017.7965587

## Description

### 1. Domaine de l'invention

Le domaine de l'invention est celui du codage et du décodage de séquences d'images, et notamment de flux vidéo.

Plus précisément, l'invention concerne la compression de séquences d'images utilisant une représentation par blocs des images.

L'invention peut notamment s'appliquer au codage vidéo mis en œuvre dans les codeurs actuels ou à venir (JPEG, MPEG, H.264, HEVC, etc et leurs amendements), et au décodage correspondant.

### 2. Art Antérieur

Les séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, le standard de compression HEVC ("High Efficiency Video Coding, Coding Tools and Specification", Matthias Wien, Signals and Communication Technology, 2015) propose de mettre en œuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en blocs de pixels. Les blocs de pixels sont alors prédits à l'aide d'informations déjà reconstruites, correspondant aux blocs précédemment codés/décodés dans l'image courante selon l'ordre de parcours des blocs dans l'image.

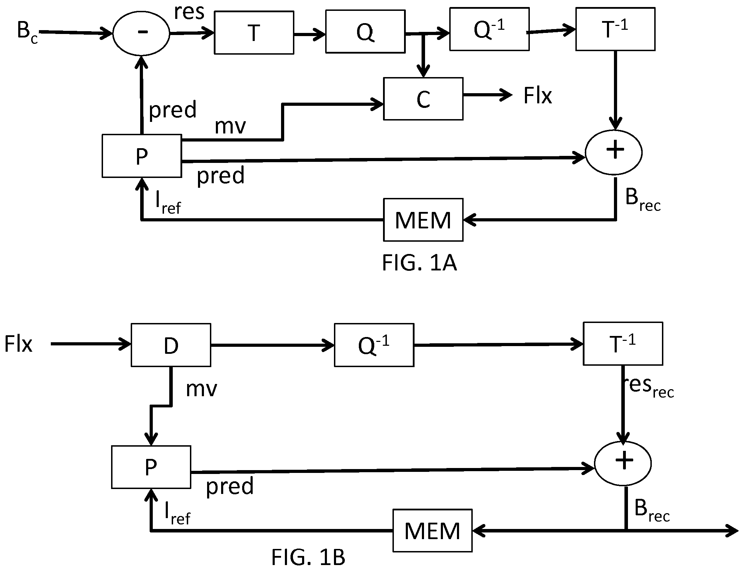

Par ailleurs, de manière classique et tel qu'illustré en figure 1A, le codage d'un bloc courant *B_{c}* est réalisé à l'aide d'une prédiction *(P)* du bloc courant fournissant un bloc prédicteur *pred* et d'un résidu de prédiction res ou « bloc résiduel », correspondant à une différence entre le bloc courant *B_{c}* et le bloc prédicteur *pred.* Le bloc résiduel *res* obtenu est alors transformé (T), par exemple en utilisant une transformée de type DCT (transformée en cosinus discrète). Les coefficients du bloc résiduel transformé sont ensuite quantifiés (Q), puis codés dans un flux de données *Flx* par un codage entropique (C) et transmis au décodeur, qui peut reconstruire le bloc courant *B_{rec}* en ajoutant ce bloc résiduel *res* au bloc prédicteur *pred.* De manière connue, le bloc courant est reconstruit également au codeur (*B_{rec}*) afin de pouvoir être utilisé pour prédire d'autres blocs de la séquence d'images.

Le décodage, par exemple illustré en figure 1B, est fait image par image, et pour chaque image, bloc par bloc. Pour chaque bloc à reconstruire, les éléments correspondants au bloc sont décodés (D) du flux de données *Flx.* La quantification inverse (*Q⁻¹*) et la transformation inverse (T⁻*¹)* des coefficients du bloc résiduel *res_{rec}* sont effectuées. Puis, la prédiction du bloc est calculée (*P*) pour obtenir le bloc prédicteur *pred* et le bloc courant est reconstruit (B_{rec}) en ajoutant la prédiction (i.e. le bloc prédicteur) au bloc résiduel décodé *res_{rec}.*

Classiquement, pour la prédiction inter-images d'un bloc courant *B_{c}*, un bloc prédicteur *pred* est recherché dans une image de référence *I_{ref}* correspondant à une image de la séquence d'images préalablement codée et reconstruite. Lors du codage/décodage d'une image courante, plusieurs images de référence peuvent être disponibles en mémoire *(MEM)* au niveau du codeur et du décodeur. Afin que le décodeur et le codeur utilisent la même image de référence *I_{ref}* pour obtenir le bloc prédicteur *pred* du bloc courant, un élément de syntaxe identifiant l'image de référence utilisée pour prédire le bloc courant est codé dans le flux de données *Flx* représentatif de la séquence d'images. De même, afin d'identifier le bloc prédicteur dans l'image de référence, un ou plusieurs éléments de syntaxe est ou sont codé(s) dans le flux de données *Flx* représentatif de la séquence d'images. De manière classique, ces éléments de syntaxe identifiant le bloc prédicteur dans l'image de référence *I_{ref}* correspondent à un vecteur de mouvement *mv* indiquant la localisation du bloc prédicteur *pred* dans l'image de référence *I_{ref}* par rapport à la localisation du bloc courant *B_{c}* dans l'image courante.

Il est connu d'utiliser un codage vidéo tel que décrit précédemment pour coder des séquences d'images particulières telles que des séquences d'images multi-vues. Pour cela, une technique, connue sous le nom de "Frame Packing" en anglais, consiste par exemple à empaqueter toutes les vues d'un instant temporel dans une seule image, et de transmettre les images comprenant les vues empaquetées à un codeur vidéo 2D classique.

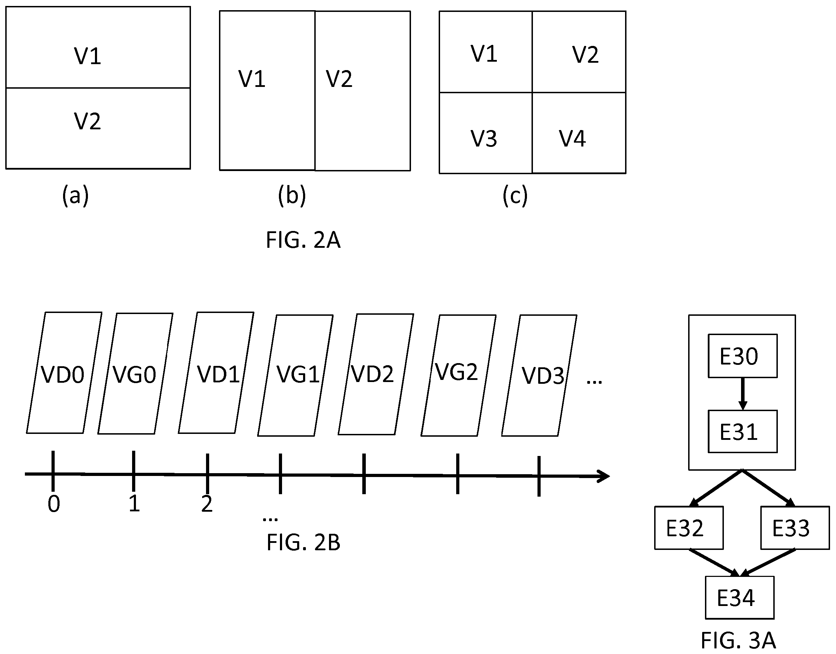

La figure 2A illustre des exemples d'arrangements de vues d'une image d'une séquence multi-vues. Par exemple, l'image (a) illustre un arrangement de deux vues V1, V2 l'une au dessus de l'autre, l'image (b) illustre un arrangement de deux vues V1, V2 l'une à côté de l'autre, et l'image (c) illustre un arrangement de quatre vues V1, V2, V3, V4 selon un parcours gauche-droite de haut en bas. D'autres arrangements de vues sont possibles et ne sont pas limités à deux ou quatre vues.

Selon la norme HEVC, un élément de syntaxe "frame_packing_arrangement_type" est codé dans le flux de données de la séquence d'images. Cet élément de syntaxe permet d'indiquer quel type de "frame packing" est mis en œuvre dans une image courante. Autrement dit, cet élément de syntaxe indique la manière dont les vues sont arrangées dans l'image courante. Par exemple, la valeur 4 indique un arrangement de type "top-bottom" en anglais, spécifiant que les vues sont arrangées les unes au-dessous des autres. Cependant, l'arrangement des vues dans l'image courante n'est pas exploité par un codeur HEVC.

Une autre technique, plus spécifique aux séquences vidéo stéréoscopiques, i.e. comprenant deux vues par instant temporel: une vue pour l'œil gauche (VG) et une vue pour l'oeil droit (VD), consiste à entrelacer les vues gauche et droite de chaque instant temporel pour obtenir la séquence d'images VD(0), VG(0), VD(1), VG(1), VD(2), VG(2), ..... Un tel exemple est illustré en figure 2B. La séquence d'images avec les vues entrelacées est ensuite transmise à un codeur vidéo 2D classique.

L'inconvénient des techniques présentées ci-dessus réside dans le fait que chaque vue d'une séquence multi-vues est codée sans exploiter les corrélations inter-vues existant entre les vues d'un même instant temporel. Les codeurs 2D vidéo ne sont pas modifiés, et les modes de codage disponibles pour coder des images d'une séquence d'images issues du "frame packing" ou des images entrelacées sont identiques à ceux utilisés pour une séquence d'images 2D mono-vue.

Il existe donc un besoin pour une nouvelle technique de codage d'un bloc courant, permettant d'améliorer la compression des données vidéo d'une séquence d'images multi-vues.
Le document Shan Liu et al. "Overview of HEVC extensions on screen content coding", 01.01.2015, décrit des techniques de codage spécifiques au codage de contenus vidéos non capturés par une caméra. Les documents Chen Y; et al. "Test Model 11 of 3D-HEVC and MV-HEVC", JCT3V-K1003, 01.05.2015, Chen Y et al. "AHG10: Motion related hooks for HEVC multiviewl3DV extension based on long-term reference pictures", JCTVC-J0121, 03.07.2012, décrivent le mécanisme d'un codeur de vidéo 3D. Le document Samelak Jaroslaw et al. "Efficient frame-compatible stereoscopic video coding using HEVC screen content coding", 22.05.2017 décrit une méthode de codage d'une vidéo stéréoscopique selon laquelle les images gauche et droite d'un même instant temporel sont arrangées dans une image courante. Le document US20140354771A1 décrit une méthode d'estimation des vecteurs de mouvement pour une vidéo stéréo 3D.

### 3. Exposé de l'invention

L'invention vient améliorer l'état de la technique. Elle concerne à cet effet, un procédé de décodage d'un flux de données représentatif d'une séquence d'images, dans lequel au moins un bloc courant d'une image courante de la séquence d'images est codé à l'aide d'un bloc prédicteur d'une image de référence, ledit bloc prédicteur étant identifié dans l'image de référence par une information de localisation. Avantageusement, un tel procédé de décodage comprend les étapes suivantes:
- obtention d'une information permettant d'identifier l'image de référence parmi un ensemble d'images de référence,
- lorsque l'image de référence vérifie un critère prédéterminé, décodage de l'information de localisation selon un premier mode de décodage,
- sinon, décodage de l'information de localisation selon un deuxième mode de décodage, les premier et deuxième modes de décodage comprenant au moins un paramètre de décodage distinct,
- reconstruction du bloc courant à partir du bloc prédicteur.

Selon l'invention, il est ainsi possible d'avoir un mode de décodage, et par là même, un mode de codage d'une information de localisation d'un bloc prédicteur différent en fonction de l'image de référence utilisée.

Ainsi, par exemple, en fonction de l'image de référence utilisée pour prédire le bloc courant, les modes de codage disponibles pour coder l'information de localisation associée au bloc prédicteur varient. Par exemple, certains modes de codage peuvent ne pas être autorisés en fonction de l'image de référence. De ce fait, en fonction de l'image de référence, la syntaxe nécessaire à la signalisation de l'information de localisation du bloc prédicteur dans l'image de référence peut être allégée par rapport au codage classique d'un vecteur de mouvement. Par exemple, le deuxième mode de décodage correspond à un décodage classique d'un standard existant, tel que le standard HEVC, et le premier mode de décodage correspond à un nouveau mode de décodage adapté à la spécificité de l'image de référence.

Selon l'invention, un paramètre de décodage d'un mode de décodage peut correspondre, de manière non limitative, à un ou plusieurs éléments de syntaxe utilisés pour signaler le mode de décodage, ou une façon de construire une liste de prédicteurs de vecteurs de mouvement pour décoder un vecteur de mouvement du bloc prédicteur, ou bien un contexte de codage entropique utilisé pour coder un élément de syntaxe du mode de décodage, ou encore une probabilité d'initialisation d'un contexte de codage entropique, etc...

Avantageusement, le procédé de décodage selon l'invention s'applique aussi bien au décodage de séquences d'images multi-vues qu'au décodage de séquences d'images mono-vue.

Selon un mode particulier de réalisation de l'invention, l'obtention d'une information permettant d'identifier l'image de référence parmi un ensemble d'images de référence comprend le décodage d'un identifiant de l'image de référence. Ainsi, l'identification de l'image de référence est faite avant le décodage de l'information de localisation, par le décodage d'un identifiant de l'image de référence. Dans ce cas, l'utilisation du premier mode de décodage ou du deuxième mode de décodage est déterminée en fonction de l'image de référence identifiée.

Selon un mode particulier de réalisation de l'invention, l'obtention d'une information permettant d'identifier l'image de référence parmi un ensemble d'images de référence comprend:
- le décodage d'une information indiquant si l'information de localisation est à décoder selon le premier mode de décodage ou selon le deuxième mode de décodage,
- lorsque l'information de localisation est à décoder selon le premier mode de décodage, identification de l'image de référence par déduction de l'utilisation du premier mode de décodage,
- lorsque l'information de localisation est à décoder selon le deuxième mode de décodage, identification de l'image de référence par le décodage à partir du flux de données d'un identifiant de l'image de référence.

Selon ce mode particulier de réalisation de l'invention, l'identification de l'image de référence est faite par déduction de l'utilisation du premier mode de décodage. Selon cette variante, lorsque le premier mode de décodage est utilisé, il n'est pas nécessaire de transmettre dans le flux de données un identifiant de l'image de référence. Il suffit de transmettre un élément de syntaxe identifiant le mode de décodage de l'information de localisation.

Selon un mode particulier de réalisation de l'invention, l'information de localisation peut être un vecteur de mouvement ou bien des coordonnées dans l'image de référence du bloc prédicteur.

Selon un autre mode particulier de réalisation de l'invention, la séquence d'images est représentative d'une vidéo multi-vues, une image de la séquence d'images comprenant un arrangement des vues d'un instant temporel de la vidéo multi-vues, et dans lequel l'image de référence vérifie le critère prédéterminé lorsque l'image de référence correspond à l'image courante. Selon ce mode particulier de réalisation de l'invention, le décodage de l'information de localisation d'un bloc prédicteur est adapté selon que l'image de référence pour le bloc courant est l'image courante, i.e. l'image en cours de décodage, ou une image de référence classique.

Selon une variante de cet autre mode particulier de réalisation de l'invention, le bloc courant appartient à une première région de l'image courante correspondant à une première vue d'un instant temporel, et le bloc prédicteur appartient à une deuxième région de l'image courante correspondant à une deuxième vue de l'instant temporel distincte de la première vue, ladite deuxième région correspondant à une région de l'image courante préalablement reconstruite. Cette variante permet de tirer profit des corrélations inter-vues d'un instant temporel en utilisant un bloc prédicteur localisé dans une partie de l'image courante déjà reconstruite.

Selon un autre mode particulier de réalisation de l'invention, la séquence d'images est représentative d'une vidéo stéréoscopique comprenant à chaque instant temporel une vue gauche et une vue droite, les images de la séquence d'images correspondant alternativement à une vue gauche ou une vue droite de la vidéo stéréoscopique, et dans lequel l'image de référence vérifie le critère prédéterminé lorsque l'image de référence correspond à une vue d'un même instant temporel que l'image courante ou lorsque l'image de référence correspond à une même vue que l'image courante. Selon ce mode particulier de réalisation de l'invention et selon une première variante, l'utilisation du premier mode de décodage de l'information de localisation d'un bloc prédicteur est dépendant selon que l'image de référence pour le bloc courant est la vue complémentaire de la vue correspondant à l'image courante. Plus précisément, si l'image courante correspond à une vue gauche, respectivement droite, d'un instant temporel, le critère est vérifié si l'image de référence correspond à la vue droite, respectivement gauche, du même instant temporel.

Selon une autre variante de ce mode particulier de réalisation de l'invention, l'utilisation du premier mode de décodage de l'information de localisation d'un bloc prédicteur est dépendant selon que l'image de référence pour le bloc courant correspond à une même vue que l'image courante. Plus précisément, si l'image courante correspond à une vue gauche, respectivement droite, d'un instant temporel, le critère est vérifié si l'image de référence correspond à une vue gauche, respectivement droite, d'un autre instant temporel.

Selon un autre mode particulier de réalisation de l'invention, l'image de référence vérifie le critère prédéterminé lorsqu'un type de l'image de référence correspond à un type prédéterminé. Selon ce mode particulier de réalisation de l'invention, le décodage de l'information de localisation d'un bloc prédicteur est adapté selon le type de l'image de référence. Par exemple, selon le standard HEVC, les images de référence sont classées en deux types: les images dites "short term" (court terme en français) et les images dites "long term" (long terme en français). Les images de référence "short term" sont identifiées par un indice représentatif d'un décalage temporel par rapport à l'image courante. Les images de référence "long term" sont identifiées par leur numéro dans la séquence d'images. Ce mode particulier de réalisation permet d'adapter le codage d'un vecteur de mouvement selon le type de l'image de référence. Par exemple, un nouveau mode de codage du vecteur de mouvement est utilisé pour les images de référence de type "long term" et le mode de codage classique du standard HEVC est utilisé pour les images de référence de type "short term".

Selon un autre mode particulier de réalisation de l'invention, l'information de localisation correspond à un vecteur de mouvement, et le premier mode de décodage construit une liste de vecteurs de mouvement comprenant au moins l'un des vecteurs de mouvement suivants:
- un vecteur de mouvement pointant vers un premier bloc de l'image de référence spatialement co-localisé avec le bloc courant de l'image courante,
- un vecteur de mouvement pointant vers un bloc de l'image de référence localisé au-dessus du premier bloc,
- un vecteur de mouvement pointant vers un bloc de l'image de référence localisé à gauche du premier bloc,
- un vecteur de mouvement pointant vers un bloc de l'image de référence localisé au-dessus et à gauche du premier bloc,
- un vecteur de mouvement pointant vers un bloc de l'image de référence localisé à droite du premier bloc,
- un vecteur de mouvement pointant vers un bloc de l'image de référence localisé au-dessus et à droite du premier bloc,
- un vecteur de mouvement pointant vers un bloc de l'image de référence localisé au-dessous du premier bloc,
- un vecteur de mouvement pointant vers un bloc de l'image de référence localisé au-dessous et à droite du premier bloc,
- un vecteur de mouvement pointant vers un bloc de l'image de référence localisé au-dessous et à gauche du premier bloc.

Selon ce mode particulier de réalisation de l'invention, le vecteur de mouvement permettant d'identifier le bloc prédicteur est codé par rapport à une liste de vecteurs de mouvement pointant vers une zone de blocs de l'image de référence centrée sur un bloc de l'image de référence co-localisé avec le bloc courant.

Selon une variante de ce mode particulier de réalisation de l'invention, la liste ne comprend qu'un seul vecteur de mouvement pour le bloc prédicteur, et ce vecteur de mouvement est un vecteur de mouvement identifiant un bloc de l'image de référence co-localisé spatialement avec le bloc courant. Selon ce mode de réalisation, lorsque l'image de référence n'est pas l'image courante, un tel vecteur de mouvement correspond à un vecteur nul. Lorsque l'image de référence correspond à l'image courante, un tel vecteur de mouvement correspond à un déplacement dans l'image courante pointant au même emplacement dans la vue de l'image courante servant de référence pour le bloc courant, que le bloc courant dans la vue en cours de décodage/codage.

Selon un autre mode particulier de réalisation de l'invention, le décodage selon le premier mode de décodage comprend les étapes suivantes:
- construction d'une liste de vecteurs de mouvement,
- décodage, à partir du flux de données, d'un indice identifiant le vecteur de mouvement parmi les vecteurs de mouvement de la liste à utiliser pour identifier le bloc prédicteur,
- décodage, à partir du flux de données, d'une information indiquant si une composante horizontale, respectivement verticale, du vecteur de mouvement identifié est égale à zéro,
- lorsque la composante horizontale, respectivement verticale, du vecteur de mouvement identifié est différente de zéro, affectation d'une valeur égale à 1 à la composante horizontale, respectivement verticale.

Ce mode particulier de réalisation de l'invention permet de réutiliser une partie de la syntaxe d'un mode de décodage AMVP (pour Advanced Motion Vector Prediction) du standard HEVC.

Selon un autre mode particulier de réalisation de l'invention, le décodage selon le premier mode de décodage et le décodage selon le deuxième mode de décodage utilisent des mêmes éléments de syntaxe pour signaler le vecteur de mouvement à utiliser pour identifier le bloc prédicteur, le premier mode de décodage et le deuxième mode de décodage utilisant des types de décodage entropique distincts ou lorsque le premier mode de décodage et le deuxième mode de décodage utilisent un même type de décodage entropique, le même type de décodage entropique utilisant un décodage contextuel, le premier mode de décodage et le deuxième mode de décodage utilisent des contextes de décodage distincts.

Selon une variante, ce mode particulier de réalisation de l'invention permet de réutiliser la syntaxe des modes de décodage de standard existants, tout en adaptant le type de décodage entropique. Par décodage entropique, on entend ici le décodage d'une suite de données binaires permettant de fournir en sortie des symboles représentatifs de la valeur des éléments de syntaxe permettant de reconstruire la séquence d'images.

Selon une autre variante, ce mode particulier de réalisation de l'invention permet d'adapter les contextes de décodage et donc de codage, entropique en fonction de l'image de référence.

L'invention concerne également un procédé de codage d'un flux de données représentatif d'une séquence d'images, comprenant les étapes suivantes, pour au moins un bloc courant d'une image courante de la séquence d'images:
- codage d'une information permettant lors du décodage du bloc courant d'obtenir une information permettant d'identifier une image de référence parmi un ensemble d'images de référence,
- lorsque l'image de référence vérifie un critère prédéterminé, codage selon un premier mode de codage, d'une information de localisation d'un bloc prédicteur de l'image de référence utilisé pour prédire le bloc courant,
- lorsque l'image de référence ne vérifie pas le critère prédéterminé, codage selon un deuxième mode de codage, de l'information de localisation, les premier et deuxième modes de codage comprenant au moins un paramètre de codage distinct,
- codage du bloc courant à partir d'au moins le bloc prédicteur.

Les caractéristiques et avantages de ce procédé de codage sont les mêmes que ceux du procédé de décodage, et ne sont pas détaillés plus amplement. Le procédé de codage peut être mis en œuvre de façon correspondante selon l'un quelconque des modes particuliers de réalisation décrits en relation avec le procédé de décodage ci-dessus.

L'invention concerne également un dispositif de décodage configuré pour mettre en œuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Selon un mode particulier de réalisation de l'invention, un tel dispositif de décodage est compris dans un terminal.

L'invention concerne également un dispositif de codage configuré pour mettre en œuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

Selon un mode particulier de réalisation de l'invention, un tel dispositif de codage est compris dans un terminal, ou un serveur.

Le procédé de décodage, respectivement le procédé de codage, selon l'invention peut être mis en œuvre de diverses manières, notamment sous forme câblée ou sous forme logicielle. Selon un mode particulier de réalisation de l'invention, le procédé de décodage, respectivement le procédé de codage, est mis en œuvre par un programme d'ordinateur. L'invention concerne également un programme d'ordinateur comportant des instructions pour la mise en œuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un signal comportant des données codées représentatives d'une séquence d'images, comprenant, pour au moins un bloc courant d'une image de la séquence d'images, des données codées du bloc courant, ledit bloc courant étant codé par prédiction à partir d'un bloc prédicteur d'une image de référence, ledit bloc prédicteur étant identifié dans l'image de référence par une information de localisation.

Selon un mode particulier de réalisation de l'invention, un tel signal comprend en outre une information d'activation associée à un groupe de blocs de l'image ou de la séquence d'images, ledit bloc courant appartenant audit groupe de blocs, ladite information d'activation indiquant:
- qu'un premier mode de décodage peut être utilisé pour décoder l'information de localisation du bloc prédicteur, lorsque l'image de référence vérifie un critère prédéterminé, et
- lorsque l'image de référence ne vérifie pas le critère prédéterminé, qu'un deuxième mode de décodage est utilisé pour décoder l'information de localisation, les premier et deuxième modes de décodage comprenant au moins un paramètre de décodage distinct.

Selon un autre mode particulier de réalisation de l'invention, un tel signal comprend en outre une information d'utilisation indiquant si un premier mode de décodage doit être utilisé pour décoder l'information de localisation du bloc prédicteur, lorsque l'image de référence vérifie un critère prédéterminé, ou si un deuxième mode de décodage doit être utilisé pour décoder l'information de localisation du bloc prédicteur lorsque l'image de référence ne vérifie pas le critère prédéterminé, les premier et deuxième modes de décodage comprenant au moins un paramètre de décodage distinct.

Selon un autre mode particulier de réalisation de l'invention, le signal comprend ladite information d'activation décrite ci-dessus et ladite information d'utilisation décrite ci-dessus.

### 4. Liste des figures

D'autres caractéristiques et avantages de l'invention apparaîtront plus clairement à la lecture de la description suivante de plusieurs modes de réalisation particuliers, donnés à titre de simples exemples illustratifs et non limitatifs, et des dessins annexés, parmi lesquels :
- les figures 1A et 1B illustrent respectivement des étapes d'une méthode de codage et de décodage vidéo selon l'art antérieur,
- la figure 2A illustre des exemples d'arrangement de vues d'un même instant temporel d'une séquence vidéo multi-vues, dans une image d'une séquence d'images,
- la figure 2B illustre un exemple d'entrelacement de vues d'une vidéo stéréoscopique pour former une séquence d'images,
- la figure 3A illustre des étapes du procédé de codage d'une séquence d'images selon un mode particulier de réalisation de l'invention,
- les figures 3B et 3C illustrent des variantes du procédé de décodage d'une séquence d'images selon un mode particulier de réalisation de l'invention,
- la figure 4 illustre un arrangement particulier de deux vues d'une séquence multi-vue dans une image d'une séquence d'images,
- la figure 5 illustre des étapes du procédé de codage d'une séquence d'images selon un autre mode particulier de réalisation de l'invention,
- la figure 6A illustre des étapes pour coder un vecteur de mouvement selon des modes de codage de l'art antérieur,
- les figures 6B et 6C illustrent des flux de données obtenus par un codage d'un vecteur de mouvement selon l'un des modes de codage décrits en figure 6A,
- la figure 7A illustre des étapes pour coder un vecteur de mouvement selon un mode particulier de réalisation de l'invention,
- les figures 7B-G illustrent des flux de données obtenus par un codage d'un vecteur de mouvement selon l'une des variantes décrites en figure 7A,
- la figure 8 illustre des étapes du procédé de décodage d'une séquence d'images selon un autre mode particulier de réalisation de l'invention,
- la figure 9 illustre un dispositif de codage d'une séquence d'images selon un mode particulier de réalisation de l'invention,
- la figure 10 illustre un dispositif de décodage d'une séquence d'images selon un mode particulier de réalisation de l'invention.

### 5. Description de modes particuliers de réalisation de l'invention

### 5.1 Principe général

Le principe général de l'invention est d'adapter le codage et le décodage d'un vecteur de mouvement utilisé pour prédire un bloc courant d'une image en fonction de l'image de référence utilisée pour prédire le bloc courant. L'invention permet ainsi d'améliorer les performances en compression d'un codeur vidéo classique.

### 5. 2 Exemples de mise en œuvre

### 5.2.1 Procédé de codage d'une séquence d'images selon un mode particulier de réalisation de l'invention

On décrit en relation avec la figure 3A, un procédé de codage d'un flux de données représentatif d'une séquence d'images selon un mode particulier de réalisation de l'invention. Le procédé est décrit ici pour un bloc de pixels courant d'une image courante à coder de la séquence d'images.

Lors d'une étape E30, une information permettant lors du décodage du bloc courant d'obtenir une information permettant d'identifier une image de référence parmi un ensemble d'images de référence, est codée dans le flux de données. Une telle image de référence est utilisée pour prédire le bloc courant à l'aide d'une information de localisation permettant d'identifier dans l'image de référence un bloc prédicteur du bloc courant.

Selon une variante, une telle information codée peut correspondre à un identifiant de l'image de référence. Par exemple, un indice d'image de référence parmi la liste des images de référence mémorisées au codeur.

Selon cette variante, lors d'une étape E31, il est vérifié si l'image de référence vérifie un critère prédéterminé.

Selon une sous-variante, la séquence d'images est représentative d'une vidéo multi-vues, et une image de la séquence d'images comprend un arrangement des vues d'un instant temporel de la vidéo multi-vues. Selon cette sous-variante, l'image de référence vérifie le critère prédéterminé lorsque l'image de référence correspond à l'image courante, i.e. si l'indice de l'image de référence est par exemple à 0, lorsque les images de référence sont identifiées par le décalage temporel par rapport à l'image courante.

Selon une autre sous-variante, la séquence d'images est représentative d'une vidéo stéréoscopique. Classiquement une vidéo stéréoscopique comprend deux vues à chaque instant temporel: une vue pour l'œil gauche (vue gauche) et une vue pour l'œil droit (vue droite). Les images de la séquence d'images correspondent alternativement à une vue gauche ou une vue droite de la vidéo stéréoscopique, i.e. les vues gauches et droites sont entrelacées temporellement, comme illustré en figure 2B. Selon cette sous-variante, l'image de référence vérifie le critère prédéterminé lorsque l'image de référence correspond à une vue d'un même instant temporel que l'image courante.

En variante, l'image de référence vérifie le critère prédéterminé lorsque l'image de référence correspond à une même vue que l'image courante.

Selon une autre sous-variante, la séquence d'images est représentative d'une vidéo 2D classique. L'image de référence vérifie le critère prédéterminé lorsque le type de l'image de référence correspond à un type prédéterminé, par exemple lorsque l'image de référence est une image de type "Long-term reference picture" selon le standard HEVC.

Selon une autre variante, une telle information codée peut correspondre à un indicateur indiquant si l'information de localisation du bloc prédicteur doit être codée selon un premier mode de codage ou selon un deuxième mode de codage. Selon cette variante, lorsque l'information de localisation est à coder selon le premier mode de codage, l'image de référence est identifiée par déduction de l'utilisation du premier mode de codage, i.e. qu'aucun indice de l'image de référence n'est à coder lorsque le premier mode de codage est utilisé. Lorsque l'information de localisation est à coder selon le deuxième mode de codage, un indice identifiant l'image de référence doit être codé dans le flux de données.

On note que selon cette autre variante, l'étape E31 n'est pas réalisée.

En effet, lorsque la séquence d'images est représentative d'une vidéo multi-vues, et qu'une image de la séquence d'images comprend un arrangement des vues d'un instant temporel de la vidéo multi-vues, selon cette variante, lorsque l'indice de l'image de référence n'est pas codé, il est affecté d'une valeur 0 et l'image de référence correspond alors à l'image courante.

Lorsque la séquence d'images est représentative d'une vidéo stéréoscopique comprenant à chaque instant temporel une vue gauche et une vue droite, et que les images de la séquence d'images correspondant alternativement à une vue gauche ou une vue droite de la vidéo stéréoscopique, et lorsque l'indice de l'image de référence n'est pas codé, l'image de référence correspond à la vue du même instant temporel que l'image courante.

Lorsque la séquence d'images est représentative d'une vidéo 2D classique, et lorsque l'indice de l'image de référence n'est pas codé, alors l'image de référence correspond à la première image de la liste d'images de référence du type prédéterminé, par exemple la première image de type "Long-term reference picture" selon le standard HEVC.

Lorsque l'image de référence vérifie le critère prédéterminé, l'information de localisation du bloc prédicteur est codée selon le premier mode de codage au cours de l'étape E32. Lorsque l'image de référence ne vérifie pas le critère prédéterminé, l'information de localisation du bloc prédicteur est codée selon le deuxième mode de codage lors d'une étape E33.

Les premier et deuxième modes de codage comprennent au moins un paramètre de codage distinct. Par exemple, un paramètre de codage d'un mode de codage peut correspondre, de manière non limitative, à un ou plusieurs éléments de syntaxe utilisés pour signaler le mode de codage, ou une façon de construire une liste de prédicteurs de vecteurs de mouvement pour décoder un vecteur de mouvement du bloc prédicteur, ou bien un contexte de codage entropique utilisé pour coder un élément de syntaxe du mode de décodage, ou encore une probabilité d'initialisation d'un contexte de codage entropique.

Lors d'une étape E34, le bloc courant est codé de manière classique à partir du bloc prédicteur, par transformation et quantification du résidu de prédiction et codage entropique des coefficients transformés et quantifiés. Classiquement, le bloc courant est reconstruit pour être stocké en mémoire.

### 5.2.2 Procédé de décodage d'une séquence d'images selon un mode particulier de réalisation de l'invention

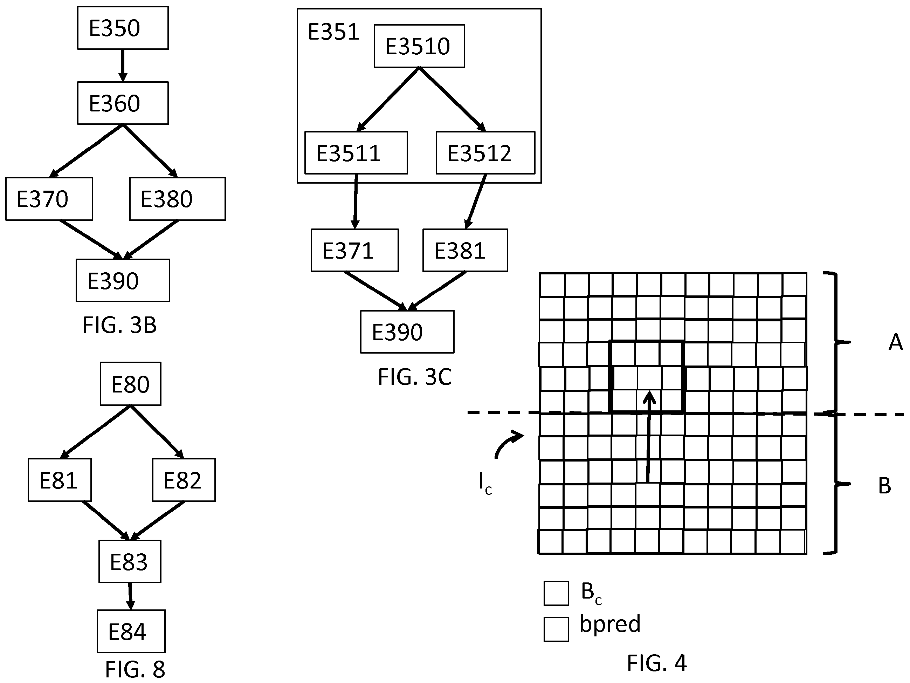

On décrit en relation avec la figure 3B, un procédé de décodage d'un flux de données représentatif d'une séquence d'images selon une variante d'un mode particulier de réalisation de l'invention. Le procédé est décrit ici pour un bloc courant d'une image courante à décoder de la séquence d'images. Le bloc courant est codé dans le flux de données à l'aide d'un bloc prédicteur d'une image de référence. Le bloc prédicteur est identifié dans l'image de référence par une information de localisation.

Lors d'une étape E350, une information permettant d'identifier l'image de référence parmi un ensemble d'images de référence est obtenue.

Selon cette variante, l'étape E350 correspond au décodage d'un identifiant iRef de l'image de référence.

Lors d'une étape E360, il est déterminé si l'image de référence vérifie un critère prédéterminé.

Lorsque la séquence d'images est représentative d'une vidéo multi-vues avec un arrangement des vues dans une image, l'image de référence vérifie le critère prédéterminé lorsque l'identifiant de l'image de référence est à 0 (lorsque les images de référence sont identifiées par le décalage temporel par rapport à l'image courante), i.e. lorsque l'identifiant de l'image de référence indique que l'image de référence est l'image courante.

Lorsque la séquence d'images est représentative d'une vidéo stéréoscopique, et que les vues sont entrelacées dans la séquence d'images, l'image de référence vérifie le critère prédéterminé lorsque l'identifiant de l'image de référence indique que l'image de référence correspond à une vue d'un même instant temporel que l'image courante. Cette vérification peut être mise en œuvre par un calcul à partir des indices respectifs de l'image courante POC1, (POC étant l'abréviation de l'anglais « Picture Order Count », connu des standards de compression vidéos de l'ITU), et de l'image de référence POC2, POC2 étant obtenu à partir de l'identifiant de l'image de référence iRef. On suppose par exemple un entrelacement tel qu'illustré en figure 2B, on vérifie alors si:
- si POC1 est pair (l'image courante est une vue droite sur l'exemple de la figure 2B), et si POC2=POC1+1, (l'image de référence est la vue gauche correspondante sur l'exemple de la figure 2B), l'image de référence vérifie le critère prédéterminé,
- si POC1 est impair (l'image courante est une vue gauche sur l'exemple de la figure 2B), et si POC2=POC1-1 (l'image de référence est la vue droite correspondante sur l'exemple de la figure 2B), l'image de référence vérifie le critère prédéterminé.
- sinon l'image de référence ne vérifie pas le critère prédéterminé.

Lorsque la séquence d'images est représentative d'une vidéo 2D classique, l'image de référence vérifie le critère prédéterminé lorsque le type de l'image de référence correspond à un type prédéterminé, par exemple lorsque l'image de référence est une image de type "Long-term reference picture" selon le standard HEVC.

Lorsque l'image de référence vérifie le critère prédéterminé, l'information de localisation est décodée selon un premier mode de décodage lors d'une étape E370.

Lorsque l'image de référence ne vérifie pas le critère prédéterminé, l'information de localisation est décodée selon un deuxième mode de décodage lors d'une étape E380.

De manière similaire au procédé de codage décrit ci-dessus, les premier et deuxième modes de décodage comprennent au moins un paramètre de décodage distinct.

Lors d'une étape E390, le bloc courant est reconstruit, de manière classique, à partir du bloc prédicteur, et des coefficient décodés, dé-quantifiés et inversement transformés.

On décrit en relation avec la figure 3C, un procédé de décodage d'un flux de données représentatif d'une séquence d'images selon une autre variante du mode particulier de réalisation de l'invention. Le procédé est décrit ici pour un bloc courant d'une image courante à décoder de la séquence d'images. Le bloc courant est codé dans le flux de données à l'aide d'un bloc prédicteur d'une image de référence. Le bloc prédicteur est identifié dans l'image de référence par une information de localisation.

Lors d'une étape E351, une information permettant d'identifier l'image de référence parmi un ensemble d'images de référence est obtenue.

Selon cette variante, l'étape E351 comprend, lors d'une étape E3510, le décodage d'une information indiquant si l'information de localisation est à décoder selon le premier mode de décodage ou selon le deuxième mode de décodage.

Lorsque l'information de localisation est à décoder selon le premier mode de décodage, lors d'une étape E3511, l'image de référence est identifiée par déduction de l'utilisation du premier mode de décodage.

Lorsque la séquence d'images est représentative d'une vidéo multi-vues avec un arrangement des vues dans une image, l'image de référence est l'image courante.

Lorsque la séquence d'images est représentative d'une vidéo stéréoscopique, et que les vues sont entrelacées dans la séquence d'images, on suppose par exemple un entrelacement tel qu'illustré en figure 2B, alors si l'indice de l'image courante est POC1, le numéro de l'image de référence est POC2, POC2 étant obtenu par:
- si POC1 est pair (l'image courante est une vue droite sur l'exemple de la figure 2B), alors POC2=POC1+1, (l'image de référence est la vue gauche correspondante sur l'exemple de la figure 2B),
- si POC1 est impair (l'image courante est une vue gauche sur l'exemple de la figure 2B), alors POC2=POC1-1 (l'image de référence est la vue droite correspondante sur l'exemple de la figure 2B).

L'identifiant iRef de l'image de référence parmi les images préalablement reconstruites et mémorisées est obtenu à partir de POC2 précédemment calculé.

Lorsque la séquence d'images est représentative d'une vidéo 2D classique, l'image de référence est identifiée comme une image de référence d'un type prédéterminé, par exemple une image de type "Long term" selon le standard HEVC.

Puis, lors d'une étape E371, l'information de localisation est décodée selon le premier mode de décodage.

Lorsque l'information de localisation est à décoder selon le deuxième mode de décodage, lors d'une étape E3512, l'image de référence est identifiée par le décodage à partir du flux de données d'un identifiant de l'image de référence.

Lors d'une étape E381, l'information de localisation est décodée selon un deuxième mode de décodage.

De manière similaire au procédé de codage décrit ci-dessus, les premier et deuxième modes de décodage comprennent au moins un paramètre de décodage distinct.

Lors d'une étape E390, le bloc courant est reconstruit, de manière classique, à partir du bloc prédicteur, et des coefficient décodés, dé-quantifiés et inversement transformés.

### 5.2.3 Procédé de codage d'une séquence d'images selon un autre mode particulier de réalisation de l'invention

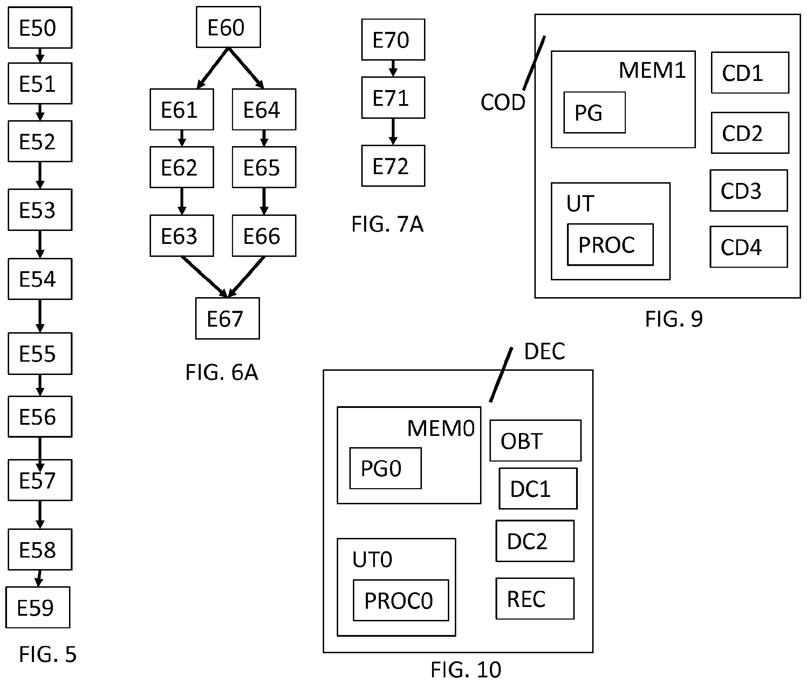

On décrit ici, en relation avec la figure 5, le procédé de codage d'une séquence d'images en un flux de données codées selon un mode particulier de réalisation de l'invention, dans lequel chaque image de la séquence d'images comprend les vues d'une image d'une séquence vidéo multi-vues arrangées selon la technique du "frame packing" décrite plus haut. L'exemple décrit ici considère un arrangement "top-bottom" et une séquence multi-vues comprenant deux vues, un tel exemple étant illustré en figure 2A (a) et figure 4. Le procédé de codage s'applique bien sûr à d'autres types d'arrangements et un nombre de vues supérieur à 2.

Au cours d'une étape E50, une image courante I_{c} de la vidéo à coder est sélectionnée. On considère qu'au moins une image de la vidéo a préalablement été codée, de manière connue, par exemple par codage spatial intra-image. Cette image préalablement codée a été reconstruite et mémorisée en mémoire.

De manière connue, l'image à coder I_{c} est découpée en un ensemble de blocs de pixels à coder. Ces blocs peuvent être de taille fixe ou variable, carré, rectangle, ou de forme arbitraire selon le codeur utilisé.

Selon un mode particulier de réalisation de l'invention, au cours d'une étape E51, un indicateur indiquant si la copie de bloc intra-image est activée ou non est codé dans le flux de données. Il s'agit d'un indicateur binaire. Cet indicateur peut être codé au niveau de chaque image de la vidéo, ou une seule fois pour un groupe d'images de la vidéo, ou une seule fois pour toute la vidéo. On l'appelle ici activate_ibc.

Selon un mode particulier de réalisation de l'invention, l'indicateur activate_ibc n'est pas codé et la copie de bloc intra est activée par défaut.

La copie de bloc intra-image, aussi connue sous le nom anglais "Intra block copy" est une méthode de prédiction permettant de coder un bloc courant d'une image à coder à l'aide d'un bloc prédicteur identifié par un vecteur de mouvement pointant dans une région de référence de l'image courante. L'image de référence pour prédire le bloc courant est donc dans ce cas l'image courante. On notera que seule la région de l'image courante comportant des blocs précédemment codés et reconstruits peut être utilisée.

Selon un mode particulier de réalisation de l'invention, lors d'une étape E52, un indicateur fp_type qui indique le type de "Frame Packing" est également codé dans le flux de données. Selon un mode particulier de réalisation de l'invention, tel qu'illustré en figure 4, l'image courante I_{c} est divisée en deux régions A et B, chaque région correspondant à une vue d'un même instant temporel. On considère ici, que la région A a été préalablement codée et reconstruite, par exemple par codage intra ou inter-images classiques.

Lors d'une étape E53, on sélectionne un bloc courant B_{c} à coder dans la partie B de l'image I_{c}.

Le codeur va simuler le codage du bloc B_{c} afin de sélectionner le meilleur mode de codage pour ce bloc.

Lors d'une étape E54, le codeur simule le codage du bloc B_{c} selon des techniques classiques de prédiction, par exemple selon celles utilisées dans la norme HEVC (G. J. Sullivan; J.-R. Ohm; W.-J. Han; T. Wiegand (Décembre 2012). "Overview of the High Efficiency Video Coding (HEVC) Standard" (PDF). IEEE Transactions on Circuits and Systems for Video Technology. IEEE. 22 (12)).

Ainsi, par exemple, le codeur simule le codage du bloc courant B_{c} par prédiction inter-image. Cette approche connue de l'homme de l'art est décrite en relation avec la figure 6A. Cette approche consiste à prédire le bloc courant B_{c} par un bloc construit à partir de pixels issus d'images précédemment codées et mémorisées, aussi appelées images de référence. Dans ce cas, de manière classique, un vecteur de mouvement et un indice indiquant l'image de référence utilisés pour prédire le bloc sont codés dans le flux.

Ensuite, un résidu est formé entre le bloc prédicteur et le bloc original, et ce résidu est transformé, quantifié, et codé.

La figure 6A illustre plus en détail le codage du vecteur de mouvement dans l'état de l'art. Dans l'état de l'art HEVC, il est possible de coder le vecteur de mouvement selon deux modes différents : le mode MERGE et le mode AMVP (pour « Advanced Motion Vector Prediction » en anglais).

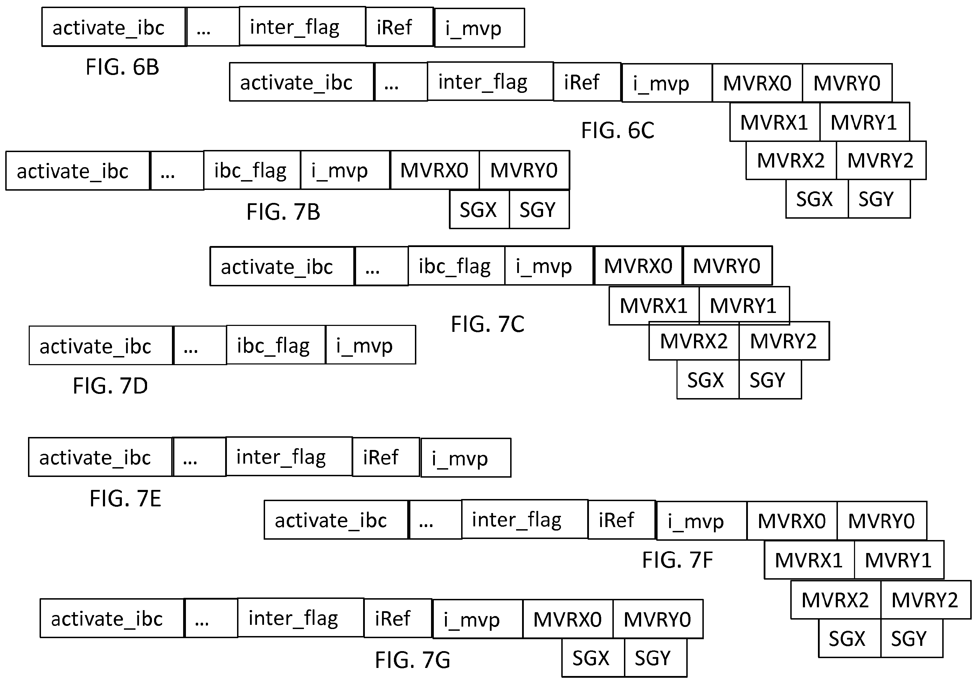

Les figures 6B et 6C illustrent des exemples de flux de données codant le vecteur de mouvement obtenu respectivement par le mode MERGE et le mode AMVP tels que décrits ci-dessous.

Lors d'une étape E60, un élément de syntaxe binaire (par exemple l'indicateur "inter_flag" illustré en figure 6B ou 6C) est codé afin d'indiquer au décodeur si c'est le mode MERGE ou le mode AMVP qui est utilisé.

Dans le mode MERGE, lors d'une étape E61, une liste de vecteurs de mouvement est constituée. Les vecteurs de mouvement de la liste sont des vecteurs de mouvement ayant servi à coder des blocs voisins du bloc courant (bloc situé à gauche, blocs situés au-dessus du bloc courant, bloc co-localisé dans l'image précédente). La façon de peupler cette liste est connue du standard HEVC.

Lors d'une étape E62, le codeur va utiliser un critère (coût débit-distorsion par exemple) pour choisir le vecteur de mouvement de la liste qui servira à prédire le bloc courant. Lors de l'étape E62, pour chaque vecteur de mouvement de la liste, le codeur calcule le coût débit-distorsion associé à ce vecteur de mouvement en réalisant les étapes de prédiction, codage et reconstruction du bloc courant B_{c} avec ce vecteur de mouvement, et le codage d'un indice (i_mvp en figure 6B) pour indiquer le vecteur de mouvement de la liste, et d'un indice indiquant l'image de référence utilisée (iRef en figure 6B).

Lors d'une étape E63, le vecteur de mouvement de la liste fournissant le meilleur critère, au sens débit/distorsion, est choisi pour le mode de codage MERGE.

Dans le mode AMVP, lors d'une étape E64, une nouvelle liste de prédicteurs est constituée, comportant, comme dans le mode MERGE, un ensemble de vecteurs de mouvement ayant servi à coder des blocs adjacents au bloc courant B_{c}. Toutefois, dans le mode AMVP, la liste est différente de la liste du mode MERGE. La façon de peupler cette liste est connue du standard HEVC.

Comme pour le mode MERGE, lors d'une étape E65, pour chaque vecteur de mouvement de la liste AMVP, le codeur calcule les coûts débit-distorsion associés à chaque vecteur de mouvement. Dans le mode AMVP, un indice (i_mvp en figure 6C) est codé de façon à indiquer le vecteur de mouvement MVA choisi et un indice indiquant l'image de référence utilisée (iRef en figure 6C). Ensuite, un résidu de vecteur de mouvement MVR est codé. Les composantes horizontale MVRx et verticale MVRy du résidu MVR sont codées indépendamment. Pour chacune de ces composantes, les informations suivantes sont codées:
- un élément de syntaxe indiquant si la composante est égale à zéro ou pas (MVRX0, MVRY0 en figure 6C),
- le cas échéant, un élément de syntaxe indiquant si la composante est égale à un ou pas (MVRX1, MVRY1 en figure 6C),
- le cas échéant, un élément de syntaxe indiquant l'amplitude de la composante diminuée de 2 (MVRX2, MVRY2 en figure 6C),
- le cas échéant, un élément de syntaxe indiquant le signe de la composante (SGX, SGY en figure 6C).

Ainsi, le vecteur de mouvement MVA utilisé pour coder le bloc courant selon le mode AMVP est donné par MVP+MVR.

Lors d'une étape E66, le vecteur de mouvement de la liste fournissant le meilleur critère, au sens débit/distorsion, est choisi pour le mode de codage AMVP.

Lors d'une étape E67, le codeur sélectionne le mode de codage MERGE ou AMVP fournissant le meilleur critère débit/distorsion.

De retour à la figure 5, lors d'une étape E55, le codeur simule le codage du bloc courant B_{c} par prédiction intra, i.e. par prédiction spatiale. Ce mode consiste à prédire le bloc courant par interpolation à partir des valeurs des pixels décodés situés immédiatement à gauche ou au-dessus du bloc courant. De manière connue, le codeur sélectionne le meilleur mode de prédiction intra pour le bloc courant B_{c}.

Lors d'une étape E56, si l'indicateur **activate_ibc** vaut 1, i.e si le mode de codage par copie de bloc intra-image est activé, le codeur simule ce mode codage.

Selon le mode particulier de réalisation décrit ici, ce mode consiste à chercher, dans la partie mémorisée de l'image courante, ici la partie A sur la figure 4, un bloc prédicteur permettant de prédire le bloc courant. L'utilisation de ce bloc prédicteur sera codée par un ou plusieurs éléments de syntaxe indiquant la localisation du bloc prédicteur dans la partie mémorisée de l'image courante. Ensuite, de façon classique, un résidu de prédiction entre le bloc courant et le bloc prédicteur est codé, de façon similaire au codage inter-images.

On décrit plus en détail, en relation avec la figure 7A, le codage de la localisation du bloc prédicteur dans la partie mémorisée de l'image courante.

Selon un mode particulier de réalisation de l'invention, la localisation du bloc prédicteur est définie par un vecteur de mouvement.

Selon l'invention, le mode de codage du vecteur de mouvement du bloc prédicteur pour ce mode de codage du bloc courant par copie de bloc intra-image est différent du codage du vecteur de mouvement d'un bloc prédicteur classique, i.e. du codage du vecteur de mouvement issu d'un mode MERGE ou AMVP. Plusieurs variantes de réalisation sont possibles pour coder le vecteur de mouvement issu du mode de codage par copie de bloc intra-image. Des exemples de flux de données codant le vecteur de mouvement obtenu pour ce mode sont illustrés par les figures 7B-G.

Plus particulièrement, selon le mode de codage du bloc courant par copie de bloc intra-image, l'image de référence utilisée pour prédire le bloc courant est l'image courante. Dès lors, selon une première variante, il n'est pas nécessaire pour ce mode de codage du bloc courant de coder un indice indiquant l'image de référence, lorsqu'une information est codée indiquant que le mode de codage du bloc courant est le mode par copie de bloc intra-image. On appelle ici ibc_flag l'indicateur indiquant que le mode de codage du bloc courant est le mode par copie de bloc intra-image. Cette variante est illustrée par les figures 7B-D.

Selon une autre variante, aucune information n'est codée pour indiquer que le mode de codage par copie de bloc intra-image est utilisé pour prédire le bloc courant. Cette information est déduite, par exemple de la valeur de l'indice de l'image de référence (indicateur iRef des figures 7E-G) codée dans un des modes de codage MERGE ou AMVP, selon la variante de mise en œuvre. Lorsque l'indice iRef de l'image de référence vaut 0, un tel indice indique que l'image courante est l'image de référence. Selon cette variante, la syntaxe de codage du vecteur de mouvement du mode MERGE ou AMVP, telle que décrite en relation avec les figures 6B ou 6C, diffère selon que l'image de référence est l'image courante ou une autre image.

En relation avec la figure 7A, selon un mode particulier de réalisation de l'invention, lors d'une étape E70, une liste de vecteurs de mouvement est créée. Une telle liste comprend par exemple les 9 vecteurs de mouvement suivants: - (0, -H/2), (1, -H/2), (-1, -H/2), (0, -H/2-1), (1, -H/2-1), (-1, -H/2-1), (0, -H/2+1), (1, -H/2+1), (-1, -H/2+1), où H est la hauteur de l'image courante.

On comprend que ces vecteurs de mouvement sont choisis car, si les régions A et B sont deux vues d'une vidéo stéréoscopique, il est très probable de trouver un bon bloc prédicteur dans une zone de la région A proche des coordonnées dans la région B du bloc courant, d'où le décalage de -H/2 dans l'exemple illustré ici. La figure 4 illustre par des blocs hachurés, les blocs prédicteurs *pred* possibles avec ces vecteurs de mouvement.

Selon d'autres modes particuliers de réalisation de l'invention, la liste peut être peuplée différemment, par exemple avec un seul vecteur de mouvement, ou d'autres vecteurs tels que dans les modes MERGE ou AMVP.

Lors d'une étape E71, le codeur va utiliser un critère (coût débit-distorsion par exemple) pour choisir le vecteur de mouvement de la liste qui servira à prédire le bloc courant B_{c}. Lors de l'étape E71, pour chaque vecteur de mouvement de la liste, le codeur calcule le coût débit-distorsion associé à ce vecteur de mouvement en réalisant les étapes de prédiction, codage et reconstruction du bloc courant B_{c} avec ce vecteur de mouvement, et le codage du vecteur de mouvement, par exemple selon l'un des modes particuliers de réalisation illustrés par les figures 7B-G.

Selon un mode particulier de réalisation de l'invention, aucun résidu MVR de vecteur de mouvement n'est codé dans le flux.

Selon une variante, un seul vecteur de mouvement est possible, i.e la liste ne comprend qu'un seul vecteur de mouvement. Selon cette variante, il s'agit du vecteur (0,-H/2), et ce vecteur de mouvement est toujours utilisé lorsque le bloc courant est codé par le mode de codage par copie de bloc intra-image. Selon cette variante, il n'est pas nécessaire de coder un indice (i_mvp) indiquant le vecteur de mouvement choisi dans la liste.

Selon une autre variante, la liste comprend plusieurs vecteurs de mouvement. Selon cette variante (illustrée par les figures 7C et 7F), une syntaxe de codage similaire à celle du mode de codage AMVP est utilisée, mais la liste de vecteurs de mouvement est peuplée avec des prédicteurs différents de ceux du mode de codage AMVP, par exemple la liste créée à l'étape E70.

Selon une autre variante, la liste comprend plusieurs vecteurs de mouvement. Selon cette variante (illustrée en figure 7B ou 7G), un sous-ensemble des éléments de syntaxe du mode de codage AMVP est utilisé. Par exemple, l'indice du vecteur de mouvement (i_mvp) dans la liste de vecteurs de mouvement est codé, puis pour chaque composante horizontale et verticale du vecteur de mouvement à coder, un élément de syntaxe (MVRX0, MVRY0) indiquant si la composante est égale à zéro ou pas est codé, et son signe (SGX, SGY) le cas échéant. Si cet élément de syntaxe indique que la composante n'est pas égale à zéro, alors une valeur 1 lui est automatiquement affectée. L'avantage de cette variante est qu'une souspartie des éléments de syntaxe du mode de codage AMVP classique est réutilisée, simplifiant ainsi l'implémentation.

Selon une autre variante, la liste comprend plusieurs vecteurs de mouvement. Selon cette variante (illustrée par les figures 7C, 7D, 7E ou 7F), les mêmes éléments de syntaxe que le mode de codage AMVP (figures 7C ou 7F) ou MERGE (figures 7D ou 7E) sont codés, mais le type de codage entropique utilisé pour le mode de codage par copie de bloc intra-images pour coder ces éléments de syntaxe est différent. Par exemple, un codage de type Huffman est utilisé pour le mode de codage par copie de bloc intra-images.

Selon encore une autre variante, la liste comprend plusieurs vecteurs de mouvement. Selon cette variante (illustrée par les figures 7C, 7D, 7E ou 7F), les mêmes éléments de syntaxe que le mode de codage AMVP ou MERGE sont codés, le type de codage entropique est également le même, ici un codage entropique contextuel, par exemple un codage de type CABAC (pour Context-Based Adaptive Binary Arithmetic Coding en anglais), décrit dans Detlev Marpe, Heiko Schwarz, and Thomas Wiegand « Context-Based Adaptive Binary Arithmetic Coding in the H.264/AVC Video Compression Standard », IEEE TRANSACTIONS ON CIRCUITS AND SYSTEMS FOR VIDEO TECHNOLOGY, VOL. 13, NO. 7, JULY 2003. Selon cette variante, les contextes du codeur arithmétique pour coder le vecteur de mouvement du mode de codage par copie de bloc intra-images sont différents des contextes du codeur arithmétique pour coder le vecteur de mouvement du mode de codage MERGE ou AMVP.

Lors d'une étape E72, le vecteur de mouvement de la liste créée lors de l'étape E70, fournissant le meilleur critère, au sens débit/distorsion, est choisi pour le mode de codage par copie de bloc intra-images.

On comprendra que la localisation dans l'image à coder I_{c} des parties A et B dépend de l'arrangement des vues dans l'image, et donc éventuellement de l'indicateur "fp-type" lorsqu'un tel indicateur est codé dans le flux de données.

De retour à la figure 5, lors d'une étape E57, le codeur sélectionne, pour le bloc courant B_{c}, parmi les différents modes de codage simulés aux étapes précédentes, le mode de codage utilisé pour réellement coder le bloc courant. Ceci se fait par comparaison des coûts débit-distorsion obtenus pour chaque mode de codage.

Lors d'une étape E58, un ou plusieurs éléments de syntaxe sont codés dans le flux de données pour identifier le mode de codage choisi lors l'étape E57, pour coder le bloc courant B_{c}.

Selon une variante de réalisation de l'invention, si le mode de codage par copie de bloc intra-images est activé, un élément de syntaxe ibc_flag est codé pour le bloc courant B_{c}. Sa valeur est 1 si le mode de codage par copie de bloc intra-images a été sélectionné lors de l'étape E57, 0 sinon. Selon un mode particulier de réalisation de l'invention, cet élément de syntaxe n'est codé que pour les blocs de la partie B de l'image.

Si l'indicateur ibc_flag vaut 0, les éléments de syntaxe du mode de codage MERGE ou AMVP sont codés de manière classique, comme illustré en figure 6B ou 6C. Si l'indicateur ibc_flag vaut 1, les éléments de syntaxe pour coder le vecteur de mouvement du bloc courant B_{c} sont codés selon l'une des variantes de réalisation décrites en relation avec les figures 7B-D.

Selon une autre variante, l'élément de syntaxe ibc_flag n'est pas codé. Si le mode de codage du vecteur de mouvement choisi à l'étape E57 est le mode de codage MERGE ou AMVP, les éléments de syntaxe du mode de codage MERGE ou AMVP sont codés par exemple selon la syntaxe illustrée en figure 6B ou 6C. Il est à noter que selon cette variante, le codage de l'indice iRef de l'image de référence est modifié par rapport au codage classique, de sorte que la valeur 0 pour cet indice iRef est réservée au mode de codage par copie de bloc intra-images et ne peut être utilisée pour le mode MERGE ou AMVP.

Si le mode de codage par copie de bloc intra-images a été sélectionné lors de l'étape E57, les éléments de syntaxe pour coder le vecteur de mouvement du bloc courant B_{c} sont codés selon l'une des variantes de réalisation décrites en relation avec les figures 7E-G, l'indice iRef de l'image de référence étant affecté de la valeur 0.

Lors d'une étape E59, si l'indicateur **activate_ibc** vaut 1, et si le bloc courant B_{c} appartient à la partie A de l'image, alors la version reconstruite du bloc courant B_{c} est mémorisée dans une mémoire comprenant des images précédemment codées-décodées et reconstruites, comme par exemple la mémoire MEM de la figure 1A comprenant des images servant à la prédiction inter. La version reconstruite du bloc courant permet ainsi de prédire les blocs suivants de l'image courante et/ou les images suivantes à coder. Le procédé de codage est itéré pour le bloc suivant de l'image courante à coder.

### 5.2.4 Procédé de décodage d'une séquence d'images selon un autre mode particulier de réalisation de l'invention

On décrit ici, en relation avec la figure 8, le procédé de décodage d'un flux de données codées représentatif d'une séquence d'images selon un mode particulier de réalisation de l'invention. On considère que le flux de données a été codé selon l'un quelconque des modes particuliers de réalisation décrits en relation avec les figures 5 et 7A.

Au cours d'une étape E80, selon un mode particulier de réalisation de l'invention, un indicateur **activate_ibc** indiquant si la copie de bloc intra-images est activée est décodé du flux de données. Un tel indicateur **activate_ibc** peut être décodé au niveau de chaque image de la vidéo, ou une seule fois pour un groupe d'images de la vidéo, ou une seule fois pour toute la vidéo.

Pour un bloc courant à décoder de l'image I_{c}, les éléments de syntaxe correspondant à ce bloc courant sont décodés du flux de données. Ces éléments comprennent notamment un indicateur indiquant le mode de codage qui a été utilisé pour le bloc courant, et permettant au décodeur d'appliquer le décodage approprié.

Selon le mode particulier de réalisation décrit ici, si l'indicateur **activate_ibc** vaut 1, et si le bloc courant appartient à une partie B de l'image, alors lors d'une étape E80, un élément de syntaxe **ibc_flag** est décodé afin de savoir si le mode de codage par copie de bloc intra-images a été utilisé pour le bloc courant.

Dans le cas où le bloc courant a été codé par copie de bloc intra-images, lors d'une étape E81, le vecteur de mouvement du bloc courant est décodé selon la variante de codage utilisée pour coder cette information et telle que décrite en relation avec les figures 7A-G. Un tel décodage est donc différent de celui utilisé dans le cas où le bloc prédicteur est issu d'une image de référence classique.

Dans le cas où le bloc courant a été codé par un mode de codage classique inter, lors d'une étape E82, le vecteur de mouvement du bloc courant est décodé selon le codage utilisé pour coder cette information et tel que décrit en relation avec les figures 6A-C.

Lors d'une étape E83, le bloc courant est reconstruit à l'aide du bloc prédicteur identifié par le vecteur de mouvement décodé lors de l'étape E81 ou E82, et des coefficients décodés à partir du flux de données.

Lors d'une étape E84, si **activate_ibc** vaut 1, et si le bloc courant appartient à la partie A de l'image, alors la version reconstruite du bloc courant est mémorisée dans une mémoire comprenant les images précédemment codées-décodées et reconstruites, comme par exemple la mémoire MEM de la figure 1B des images servant à la prédiction inter. La version reconstruite du bloc courant permet ainsi de reconstruire les blocs suivants de l'image courante et/ou les images suivantes à décoder. Le procédé de décodage est itéré pour le bloc suivant de l'image courante à décoder.

### 5.2.5 Autres modes particuliers de réalisation de l'invention

Les procédés de codage et de décodage décrits ci-dessus s'appliquent également selon l'une quelconque de leur variante au cas des séquences d'images représentatives d'une vidéo stéréoscopique pour laquelle les vues gauche et droite sont entrelacées dans la séquence d'images.

L'indicateur activate_ibc est alors représentatif de l'activation ou non du mode de codage ou de décodage du vecteur de mouvement pour le bloc courant selon le mode de codage et de décodage décrit en relation avec les figures 7A-G. Dans ce mode particulier de réalisation de l'invention, les étapes décrites en relation avec les figures 5 à 8 sont similaires, la seule différence résidant dans l'image de référence utilisée pour le mode de codage ou de décodage illustré par les figures 7A-G qui est alors l'image de la vue complémentaire de l'image courante. Des méthodes d'identification d'une telle image de référence ont déjà été décrites plus haut.

Les procédés de codage et de décodage décrits ci-dessus s'appliquent également selon l'une quelconque de leur variante au cas des séquences d'images 2D classiques. L'indicateur activate_ibc est alors représentatif de l'activation ou non du mode de codage ou de décodage du vecteur de mouvement pour le bloc courant selon le mode de codage et de décodage décrit en relation avec les figures 7A-G. Dans ce mode particulier de réalisation de l'invention, les étapes décrites en relation avec les figures 5 à 8 sont similaires, la seule différence résidant dans l'image de référence utilisée pour le mode de codage ou de décodage illustré par les figures 7A-G qui est alors une image d'un type prédéterminé, par exemple une image dite "Long term" (pour long term reference pictures en anglais, connu du standard HEVC) identifiée par son numéro dans la séquence vidéo et non, comme une image de référence classique, par son décalage temporel avec l'image courante.

Selon ce mode particulier de réalisation de l'invention, les blocs de l'image courante utilisant des images de référence de type "long term" n'utilisent que le mode AMVP. Il n'est donc pas nécessaire, selon certaines variantes de réalisation, de coder/décoder l'élément de syntaxe binaire qui indique si le mode MERGE ou AMVP est utilisé.

### 5.2.6 Dispositif de codage d'une séquence d'images selon un mode particulier de réalisation de l'invention

La figure 9 présente la structure simplifiée d'un dispositif de codage COD adapté pour mettre en œuvre le procédé de codage selon l'un quelconque des modes particuliers de réalisation de l'invention.

Selon un mode particulier de réalisation de l'invention, les étapes du procédé de codage sont mises en œuvre par des instructions de programme d'ordinateur. Pour cela, le dispositif de codage COD a l'architecture classique d'un ordinateur et comprend notamment une mémoire MEM1, une unité de traitement UT, équipée par exemple d'un processeur PROC, et pilotée par le programme d'ordinateur PG stocké en mémoire MEM1. Le programme d'ordinateur PG comprend des instructions pour mettre en œuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre les étapes du procédé de codage décrit ci-dessus, selon les instructions du programme d'ordinateur PG.

Selon un autre mode particulier de réalisation de l'invention, le procédé de codage est mis en œuvre par des modules fonctionnels. Pour cela, le dispositif de codage COD comprend en outre:
- un premier module de codage CD1 configuré pour coder une information permettant lors du décodage du bloc courant d'obtenir une information permettant d'identifier une image de référence parmi un ensemble d'images de référence,
- un deuxième module de codage CD2 configuré pour, lorsque l'image de référence vérifie un critère prédéterminé, coder selon un premier mode de codage, une information de localisation d'un bloc prédicteur de l'image de référence utilisé pour prédire le bloc courant,
- un troisième module de codage CD3 configuré pour, lorsque l'image de référence ne vérifie pas le critère prédéterminé, coder selon un deuxième mode de codage, l'information de localisation, les premier et deuxième modes de codage comprenant au moins un paramètre de codage distinct,
- un quatrième module de codage CD4 configuré pour coder un bloc courant à partir d'au moins le bloc prédicteur.

L'unité de traitement UT coopère avec les différents modules fonctionnels décrits ci-dessus et la mémoire MEM1 afin de mettre en œuvre les étapes du procédé de codage.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par le processeur. Sous une forme matérielle, un tel module fonctionnel peut être mis en œuvre par tout type de circuits d'encodage adaptés, tels que par exemple et de manière non limitative des microprocesseurs, des processeurs de traitement du signal (DSP pour « Digital Signal Processor » en anglais), des circuits intégrés spécifiques à des applications (ASICs pour « Application Specific Integrated Circuit » en anglais), des circuits FPGA (pour « Field Programmable Gate Arrays » en anglais), un câblage d'unités logiques...

### 5.2.7 Dispositif de décodage d'une séquence d'images selon un mode particulier de réalisation de l'invention

La figure 10 présente la structure simplifiée d'un dispositif de décodage DEC adapté pour mettre en œuvre le procédé de décodage selon l'un quelconque des modes particuliers de réalisation de l'invention.

Selon un mode particulier de réalisation de l'invention, le dispositif de décodage DEC a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en œuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire avant d'être exécutées par le processeur PROC0. Le processeur PROC0 de l'unité de traitement UT0 met notamment en œuvre les étapes du procédé de décodage décrit ci-dessus, selon les instructions du programme d'ordinateur PG0.

Selon un autre mode particulier de réalisation de l'invention, le procédé de décodage est mis en œuvre par des modules fonctionnels. Pour cela, le dispositif de décodage DEC comprend en outre :
- un module d'obtention OBT configuré pour obtenir une information permettant d'identifier l'image de référence parmi un ensemble d'images de référence,
- un premier module de décodage DC1 configuré pour, lorsque l'image de référence vérifie un critère prédéterminé, décoder l'information de localisation selon un premier mode de décodage,
- un deuxième module de décodage DC2 configuré pour, lorsque l'image de référence ne vérifie pas le critère prédéterminé, décoder l'information de localisation selon un deuxième mode de décodage, les premier et deuxième modes de décodage comprenant au moins un paramètre de décodage distinct,
- un module de reconstruction REC configuré pour reconstruire le bloc courant à partir d'au moins le bloc prédicteur.

L'unité de traitement UT0 coopère avec les différents modules fonctionnels décrits ci-dessus et la mémoire MEM0 afin de mettre en œuvre les étapes du procédé de décodage.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par le processeur. Sous une forme matérielle, un tel module fonctionnel peut être mis en œuvre par tout type de circuits de décodage adaptés, tels que par exemple et de manière non limitative des microprocesseurs, des processeurs de traitement du signal (DSP), des circuits intégrés spécifiques à des applications (ASICs), des circuits FPGA, un câblage d'unités logiques...

## Revendications

1. Procédé de décodage d'un flux de données représentatif d'une séquence d'images , **caractérisé en ce qu'**il comprend les étapes suivantes, pour au moins un bloc courant d'une image courante de la séquence d'images, la séquence d'images étant représentative d'une vidéo stéréoscopique comprenant à chaque instant temporel une vue gauche et une vue droite, les images de la séquence d'images correspondant alternativement à une vue gauche ou une vue droite de la vidéo stéréoscopique, ledit bloc courant étant codé à l'aide d'un bloc prédicteur d'une image de référence, ledit bloc prédicteur étant identifié dans l'image de référence par une information de localisation:
- obtention (E350, E351) d'une information permettant d'identifier l'image de référence parmi un ensemble d'images de référence,
- obtention d'un indice de l'image de référence à partir de ladite information et vérification d'un critère prédéterminé à partir des indices respectifs de l'image courante et de l'image de référence et d'une parité de l'indice de l'image courante, ledit critère prédéterminé étant vérifié lorsque l'image de référence correspond à une vue d'un même instant temporel que l'image courante;
lorsque l'image de référence vérifie le critère prédéterminé, décodage (E370, E371) de l'information de localisation selon un premier mode de décodage,
- sinon, décodage (E380, E381) de l'information de localisation selon un deuxième mode de décodage, les premier et deuxième modes de décodage comprenant au moins un paramètre de décodage distinct correspondant à un ou plusieurs éléments de syntaxe utilisés pour signaler le mode de décodage, ou une façon de construire une liste de prédicteurs de vecteurs de mouvement pour décoder un vecteur de mouvement du bloc prédicteur, ou bien un contexte de codage entropique utilisé pour coder un élément de syntaxe du mode de décodage, ou encore une probabilité d'initialisation d'un contexte de codage entropique,
- reconstruction (E390) du bloc courant à partir du bloc prédicteur.

2. Procédé de décodage selon la revendication 1, dans lequel l'obtention d'une information permettant d'identifier l'image de référence parmi un ensemble d'images de référence comprend le décodage d'un identifiant de l'image de référence.

3. Procédé de décodage selon la revendication 1, dans lequel l'obtention d'une information permettant d'identifier l'image de référence parmi un ensemble d'images de référence comprend:
- le décodage d'une information indiquant si l'information de localisation est à décoder selon le premier mode de décodage ou selon le deuxième mode de décodage,
- lorsque l'information de localisation est à décoder selon le premier mode de décodage, identification de l'image de référence par déduction de l'utilisation du premier mode de décodage,
- lorsque l'information de localisation est à décoder selon le deuxième mode de décodage, identification de l'image de référence par le décodage à partir du flux de données d'un identifiant de l'image de référence.

4. Procédé de décodage selon l'une quelconque des revendications 1 à 3, dans lequel l'information de localisation correspond à un vecteur de mouvement, et dans lequel le premier mode de décodage construit une liste de vecteurs de mouvement comprenant au moins l'un des vecteurs de mouvement suivant:
- un vecteur de mouvement pointant vers un premier bloc de l'image de référence spatialement co-localisé avec le bloc courant de l'image courante,
- un vecteur de mouvement pointant vers un bloc de l'image de référence localisé au-dessus du premier bloc,
- un vecteur de mouvement pointant vers un bloc de l'image de référence localisé à gauche du premier bloc,
- un vecteur de mouvement pointant vers un bloc de l'image de référence localisé au-dessus et à gauche du premier bloc,
- un vecteur de mouvement pointant vers un bloc de l'image de référence localisé à droite du premier bloc,
- un vecteur de mouvement pointant vers un bloc de l'image de référence localisé au-dessus et à droite du premier bloc,
- un vecteur de mouvement pointant vers un bloc de l'image de référence localisé au-dessous du premier bloc,
- un vecteur de mouvement pointant vers un bloc de l'image de référence localisé au-dessous et à droite du premier bloc,
- un vecteur de mouvement pointant vers un bloc de l'image de référence localisé au-dessous et à gauche du premier bloc.

5. Procédé de décodage selon l'une quelconque des revendications 1 à 3, dans lequel le décodage selon le premier mode de décodage comprend les étapes suivantes:
- construction d'une liste de vecteurs de mouvement,
- décodage, à partir du flux de données, d'un indice identifiant le vecteur de mouvement parmi les vecteurs de mouvement de la liste à utiliser pour identifier le bloc prédicteur,
- décodage, à partir du flux de données, d'une information indiquant si une composante horizontale, respectivement verticale, du vecteur de mouvement identifié est égale à zéro,
- lorsque la composante horizontale, respectivement verticale, du vecteur de mouvement identifié est différente de zéro, affectation d'une valeur égale à 1 à la composante horizontale, respectivement verticale.

6. Procédé de décodage selon l'une quelconque des revendications 1 à 3, dans lequel le décodage selon le premier mode de décodage et le décodage selon le deuxième mode de décodage utilisent des mêmes éléments de syntaxe pour signaler le vecteur de mouvement à utiliser pour identifier le bloc prédicteur, le premier mode de décodage et le deuxième mode de décodage utilisant des types de décodage entropique distincts ou lorsque le premier mode de décodage et le deuxième mode de décodage utilisent un même type de décodage entropique, le même type de décodage entropique utilisant un décodage contextuel, le premier mode de décodage et le deuxième mode de décodage utilisent des contextes de décodage distincts.

7. Dispositif de décodage d'un flux de données représentatif d'une séquence d'images comprenant au moins un bloc courant d'une image courante, la séquence d'images étant représentative d'une vidéo stéréoscopique comprenant à chaque instant temporel une vue gauche et une vue droite, les images de la séquence d'images correspondant alternativement à une vue gauche ou une vue droite de la vidéo stéréoscopique, ledit bloc courant étant codé à l'aide d'un bloc prédicteur d'une image de référence, ledit bloc prédicteur étant identifié dans l'image de référence par une information de localisation, le dispositif de décodage est **caractérisé en ce qu'**il comprend:
- un module d'obtention (OBT) configuré pour obtenir une information permettant d'identifier l'image de référence parmi un ensemble d'images de référence,
- un module de vérification d'un critère prédéterminé à partir des indices respectifs de l'image courante et de l'image de référence et d'une parité de l'indice de l'image courante, l'indice de l'image de référence étant obtenu à partir de ladite information, ledit critère prédéterminé étant vérifié lorsque l'image de référence correspond à une vue d'un même instant temporel que l'image courante ;
- un premier module de décodage (DC1) configuré pour, lorsque l'image de référence vérifie le critère prédéterminé, décoder l'information de localisation selon un premier mode de décodage,
- un deuxième module de décodage (DC2) configuré pour, lorsque l'image de référence ne vérifie pas le critère prédéterminé, décoder l'information de localisation selon un deuxième mode de décodage, les premier et deuxième modes de décodage comprenant au moins un paramètre de décodage distinct correspondant à un ou plusieurs éléments de syntaxe utilisés pour signaler le mode de décodage, ou une façon de construire une liste de prédicteurs de vecteurs de mouvement pour décoder un vecteur de mouvement du bloc prédicteur, ou bien un contexte de codage entropique utilisé pour coder un élément de syntaxe du mode de décodage, ou encore une probabilité d'initialisation d'un contexte de codage entropique,
- un module de reconstruction (REC) configuré pour reconstruire le bloc courant à partir du bloc prédicteur.

8. Procédé de codage d'un flux de données représentatif d'une séquence d'images, la séquence d'images étant représentative d'une vidéo stéréoscopique comprenant à chaque instant temporel une vue gauche et une vue droite, les images de la séquence d'images correspondant alternativement à une vue gauche ou une vue droite de la vidéo stéréoscopique, **caractérisé en ce qu'**il comprend les étapes suivantes, pour au moins un bloc courant d'une image courante de la séquence d'images:
- codage (E30) d'une information permettant lors du décodage du bloc courant d'obtenir une information permettant d'identifier une image de référence parmi un ensemble d'images de référence,
- vérification d'un critère prédéterminé par calcul à partir des indices respectifs de l'image courante et de l'image de référence et prenant en compte une parité de l'indice de l'image courante, l'indice de l'image de référence étant obtenu à partir de ladite information, ledit critère prédéterminé étant vérifié lorsque l'image de référence correspond à une vue d'un même instant temporel que l'image courante ;
- lorsque l'image de référence vérifie le critère prédéterminé, codage (E32), selon un premier mode de codage, d'une information de localisation d'un bloc prédicteur de l'image de référence utilisé pour prédire le bloc courant,
- lorsque l'image de référence ne vérifie pas le critère prédéterminé, codage (E33), selon un deuxième mode de codage, de l'information de localisation, les premier et deuxième modes de codage comprenant au moins un paramètre de codage distinct, un paramètre de codage d'un mode de codage correspondant à un ou plusieurs éléments de syntaxe utilisés pour signaler le mode de codage, ou une façon de construire une liste de prédicteurs de vecteurs de mouvement pour coder un vecteur de mouvement du bloc prédicteur, ou bien un contexte de codage entropique utilisé pour coder un élément de syntaxe du mode de codage, ou encore une probabilité d'initialisation d'un contexte de codage entropique,
- codage (E34) du bloc courant à partir d'au moins le bloc prédicteur.

9. Dispositif de codage d'un flux de données représentatif d'une séquence d'images comprenant au moins un bloc courant d'une image courante, la séquence d'images étant représentative d'une vidéo stéréoscopique comprenant à chaque instant temporel une vue gauche et une vue droite, les images de la séquence d'images correspondant alternativement à une vue gauche ou une vue droite de la vidéo stéréoscopique, le dispositif de codage est **caractérisé en ce qu'**il comprend :
- un premier module de codage (CD1) configuré pour coder une information permettant lors du décodage du bloc courant d'obtenir une information permettant d'identifier une image de référence parmi un ensemble d'images de référence,
- un module de vérification d'un critère prédéterminé à partir des indices respectifs de l'image courante et de l'image de référence et d'une parité de l'indice de l'image courante, l'indice de l'image de référence étant obtenu à partir de ladite information, ledit critère prédéterminé étant vérifié lorsque l'image de référence correspond à une vue d'un même instant temporel que l'image courante ;
- un deuxième module de codage (CD2) configuré pour, lorsque l'image de référence vérifie le critère prédéterminé, coder selon un premier mode de codage, une information de localisation d'un bloc prédicteur de l'image de référence utilisé pour prédire le bloc courant,
- un troisième module de codage (CD3) configuré pour, lorsque l'image de référence ne vérifie pas le critère prédéterminé, coder selon un deuxième mode de codage, l'information de localisation, les premier et deuxième modes de codage comprenant au moins un paramètre de codage distinct, un paramètre de codage d'un mode de codage correspondant à un ou plusieurs éléments de syntaxe utilisés pour signaler le mode de codage, ou une façon de construire une liste de prédicteurs de vecteurs de mouvement pour coder un vecteur de mouvement du bloc prédicteur, ou bien un contexte de codage entropique utilisé pour coder un élément de syntaxe du mode de codage, ou encore une probabilité d'initialisation d'un contexte de codage entropique,
- un quatrième module de codage (CD4) configuré pour coder un bloc courant à partir du bloc prédicteur.

10. Programme d'ordinateur comportant des instructions pour la mise en œuvre du procédé de décodage selon l'une quelconque des revendications 1 à 6 ou pour la mise en œuvre du procédé de codage selon la revendication 8, lorsque le programme est exécuté par un processeur.

11. Signal comportant des données codées représentatives d'une séquence d'images, la séquence d'images étant représentative d'une vidéo stéréoscopique comprenant à chaque instant temporel une vue gauche et une vue droite, les images de la séquence d'images correspondant alternativement à une vue gauche ou une vue droite de la vidéo stéréoscopique, ledit signal comprenant, pour au moins un bloc courant d'une image de la séquence d'images, des données codées du bloc courant, ledit bloc courant étant codé par prédiction à partir d'un bloc prédicteur d'une image de référence, ledit bloc prédicteur étant identifié dans l'image de référence par une information de localisation, un indice de l'image de référence étant obtenu à partir de ladite information, un critère prédéterminé étant vérifié à partir des indices respectifs de l'image courante et de l'image de référence et d'une parité de l'indice de l'image courante, ledit critère prédéterminé étant vérifié lorsque l'image de référence correspond à une vue d'un même instant temporel que l'image courante;
le signal est **caractérisé en ce qu'**il comprend en outre une information d'utilisation (ibc_flag) indiquant si un premier mode de décodage doit être utilisé pour décoder l'information de localisation du bloc prédicteur, lorsque l'image de référence vérifie le critère prédéterminé, , ou si un deuxième mode de décodage doit être utilisé pour décoder l'information de localisation du bloc prédicteur lorsque l'image de référence ne vérifie pas le critère prédéterminé, les premier et deuxième modes de décodage comprenant au moins un paramètre de décodage distinct correspondant à un ou plusieurs éléments de syntaxe utilisés pour signaler le mode de décodage, ou une façon de construire une liste de prédicteurs de vecteurs de mouvement pour décoder un vecteur de mouvement du bloc prédicteur, ou bien un contexte de codage entropique utilisé pour coder un élément de syntaxe du mode de décodage, ou encore une probabilité d'initialisation d'un contexte de codage entropique.

## Patentansprüche

1. Verfahren zum Decodieren eines eine Bildsequenz darstellenden Datenstroms, **dadurch gekennzeichnet, dass** es für mindestens einen aktuellen Block eines aktuellen Bildes der Bildsequenz die folgenden Schritte enthält, wobei die Bildsequenz ein stereoskopisches Video darstellt, das zu jedem Zeitpunkt eine linke und eine rechte Ansicht enthält, wobei die Bilder der Bildsequenz abwechselnd einer linken oder einer rechten Ansicht des stereoskopischen Videos entsprechen, wobei der aktuelle Block unter Verwendung eines Vorhersageblocks eines Referenzbildes codiert ist, wobei der Vorhersageblock im Referenzbild durch eine Positionsinformation identifiziert wird:
- Erhalten (E350, E351) einer Information, die es ermöglicht, das Referenzbild aus einer Gruppe von Referenzbildern zu identifizieren,
- Erhalten eines Indexes des Referenzbildes anhand der genannten Information und Prüfen eines vorgegebenen Kriteriums anhand der jeweiligen Indizes des aktuellen Bildes und des Referenzbildes sowie einer Parität des Indexes des aktuellen Bildes, wobei das vorgegebene Kriterium erfüllt ist, wenn das Referenzbild einer Ansicht entspricht, die zum gleichen Zeitpunkt wie das aktuelle Bild aufgenommen wurde;
wenn das Referenzbild das vorgegebene Kriterium erfüllt, Decodieren (E370, E371) der Positionsinformation gemäß einem ersten Decodierungsmodus,
- ansonsten Decodieren (E380, E381) der Positionsinformation gemäß einem zweiten Decodierungsmodus, wobei der erste und der zweite Decodierungsmodus mindestens einen unterschiedlichen Decodierungsparameter enthalten, der einem oder mehreren Syntaxelementen entspricht, die zur Signalisierung des Decodierungsmodus verwendet werden, oder eine Methode zum Erstellen einer Liste von Bewegungsvektor-Vorhersagen zum Decodieren eines Bewegungsvektors des Vorhersageblocks, oder einen entropischen Codierungskontext, der zum Codieren eines Syntaxelements des Decodierungsmodus verwendet wird, oder eine Initialisierungswahrscheinlichkeit eines entropischen Codierungskontexts,
- Rekonstruieren (E390) des aktuellen Blocks auf der Grundlage des Vorhersageblocks.

2. Verfahren zum Decodieren nach Anspruch 1, wobei das Erhalten einer Information, die es ermöglicht, das Referenzbild aus einer Gruppe von Referenzbildern zu identifizieren, das Decodieren einer Kennung des Referenzbildes enthält.

3. Verfahren zum Decodieren nach Anspruch 1, wobei das Erhalten einer Information, die es ermöglicht, das Referenzbild aus einer Gruppe von Referenzbildern zu identifizieren, Folgendes enthält:
- das Decodieren einer Information, die angibt, ob die Positionsinformation gemäß dem ersten Decodierungsmodus oder gemäß dem zweiten Decodierungsmodus zu decodieren ist,
- wenn die Positionsinformation gemäß dem ersten Decodierungsmodus zu decodieren ist, Identifizieren des Referenzbildes durch Ableitung aus der Verwendung des ersten Decodierungsmodus,
- wenn die Positionsinformation gemäß dem zweiten Decodierungsmodus zu decodieren ist, Identifizieren des Referenzbildes durch Decodieren einer Kennung des Referenzbildes aus dem Datenstrom.

4. Verfahren zum Decodieren nach einem der Ansprüche 1 bis 3, wobei die Positionsinformation einem Bewegungsvektor entspricht und wobei der erste Decodierungsmodus eine Liste von Bewegungsvektoren erstellt, die mindestens einen der folgenden Bewegungsvektoren enthält:
- einen Bewegungsvektor, der auf einen ersten Block des Referenzbildes zeigt, der räumlich mit dem aktuellen Block des aktuellen Bildes übereinstimmt,
- einen Bewegungsvektor, der auf einen Block des Referenzbildes zeigt, der sich oberhalb des ersten Blocks befindet,
- einen Bewegungsvektor, der auf einen Block des Referenzbildes zeigt, der sich links vom ersten Block befindet,
- einen Bewegungsvektor, der auf einen Block des Referenzbildes zeigt, der sich oberhalb und links vom ersten Block befindet,
- einen Bewegungsvektor, der auf einen Block des Referenzbildes zeigt, der sich rechts vom ersten Block befindet,
- einen Bewegungsvektor, der auf einen Block des Referenzbildes zeigt, der sich oberhalb und rechts vom ersten Block befindet,
- einen Bewegungsvektor, der auf einen Block des Referenzbildes zeigt, der sich unterhalb des ersten Blocks befindet,
- einen Bewegungsvektor, der auf einen Block des Referenzbildes zeigt, der sich unterhalb und rechts vom ersten Block befindet,
- einen Bewegungsvektor, der auf einen Block des Referenzbildes zeigt, der sich unterhalb und links vom ersten Block befindet.

5. Verfahren zum Decodieren nach einem der Ansprüche 1 bis 3, wobei das Decodieren gemäß dem ersten Decodierungsmodus die folgenden Schritte enthält:
- Erstellen einer Liste von Bewegungsvektoren,
- Decodieren eines Index aus dem Datenstrom, der den Bewegungsvektor unter den Bewegungsvektoren in der Liste identifiziert, der zum Identifizieren des Vorhersageblocks verwendet werden soll,
- Decodieren einer Information aus dem Datenstrom, die angibt, ob eine horizontale bzw. vertikale Komponente des identifizierten Bewegungsvektors gleich Null ist,
- wenn die horizontale bzw. vertikale Komponente des identifizierten Bewegungsvektors von Null verschieden ist, Zuordnen eines Wertes gleich 1 zu der horizontalen bzw. vertikalen Komponente.

6. Verfahren zum Decodieren nach einem der Ansprüche 1 bis 3, wobei das Decodieren gemäß dem ersten Decodierungsmodus und das Decodieren gemäß dem zweiten Decodierungsmodus dieselben Syntaxelemente verwenden, um den Bewegungsvektor zu signalisieren, der zum Identifizieren des Vorhersageblocks verwendet werden soll, wobei der erste Decodierungsmodus und der zweite Decodierungsmodus unterschiedliche entropische Decodierungstypen verwenden oder, wenn der erste Decodierungsmodus und der zweite Decodierungsmodus denselben entropischen Decodierungstyp verwenden, dieser entropische Decodierungstyp eine kontextuelle Decodierung verwendet, wobei der erste Decodierungsmodus und der zweite Decodierungsmodus unterschiedliche Decodierungskontexte verwenden.

7. Vorrichtung zum Decodieren eines eine Bildsequenz darstellenden Datenstroms, die mindestens einen aktuellen Block eines aktuellen Bildes enthält, wobei die Bildsequenz ein stereoskopisches Video darstellt, das zu jedem Zeitpunkt eine linke und eine rechte Ansicht enthält, wobei die Bilder der Bildsequenz abwechselnd einer linken oder einer rechten Ansicht des stereoskopischen Videos entsprechen, wobei der aktuelle Block unter Verwendung eines Vorhersageblocks eines Referenzbildes codiert ist, wobei der Vorhersageblock im Referenzbild durch eine Positionsinformation identifiziert wird, wobei die Vorrichtung zum Decodieren **dadurch gekennzeichnet ist, dass** sie Folgendes enthält:
- ein Modul zum Erhalten (OBT), das dazu ausgelegt ist, eine Information zu erhalten, die es ermöglicht, das Referenzbild aus einer Gruppe von Referenzbildern zu identifizieren,
- ein Modul zum Prüfen eines vorgegebenen Kriteriums anhand der jeweiligen Indizes des aktuellen Bildes und des Referenzbildes sowie einer Parität des Indexes des aktuellen Bildes, wobei der Index des Referenzbildes aus der Information erhalten wird, wobei das vorgegebene Kriterium erfüllt ist, wenn das Referenzbild einer Ansicht entspricht, die zum gleichen Zeitpunkt wie das aktuelle Bild aufgenommen wurde;
- ein erstes Modul zum Decodieren (DC1), das dazu ausgelegt ist, die Positionsinformation gemäß einem ersten Decodierungsmodus zu decodieren, wenn das Referenzbild das vorgegebene Kriterium erfüllt,
- ein zweites Modul zum Decodieren (DC2), das dazu ausgelegt ist, die Positionsinformation gemäß einem zweiten Decodierungsmodus zu decodieren, wenn das Referenzbild das vorgegebene Kriterium nicht erfüllt, wobei der erste und der zweite Decodierungsmodus mindestens einen unterschiedlichen Decodierungsparameter enthalten, der einem oder mehreren Syntaxelementen entspricht, die zur Signalisierung des Decodierungsmodus verwendet werden, oder eine Methode zum Erstellen einer Liste von Bewegungsvektor-Vorhersagen zum Decodieren eines Bewegungsvektors des Vorhersageblocks, oder einen entropischen Codierungskontext, der zum Codieren eines Syntaxelements des Decodierungsmodus verwendet wird, oder eine Initialisierungswahrscheinlichkeit eines entropischen Codierungskontexts,
- ein Rekonstruktionsmodul (REC), das dazu ausgelegt ist, den aktuellen Block aus dem Vorhersageblock zu rekonstruieren.

8. Verfahren zum Codieren eines eine Bildsequenz darstellenden Datenstroms, wobei die Bildsequenz ein stereoskopisches Video darstellt, das zu jedem Zeitpunkt eine linke und eine rechte Ansicht enthält, wobei die Bilder der Bildsequenz abwechselnd einer linken oder einer rechten Ansicht des stereoskopischen Videos entsprechen, **dadurch gekennzeichnet, dass** es die folgenden Schritte für mindestens einen aktuellen Block eines aktuellen Bildes der Bildsequenz enthält:
- Codieren (E30) einer Information, die es ermöglicht, während des Decodierens des aktuellen Blocks eine Information zu erhalten, die es ermöglicht, das Referenzbild aus einer Gruppe von Referenzbildern zu identifizieren,
- Prüfen eines vorgegebenen Kriteriums durch Berechnung anhand der jeweiligen Indizes des aktuellen Bildes und des Referenzbildes und Berücksichtigen einer Parität des Indexes des aktuellen Bildes, wobei der Index des Referenzbildes aus der Information erhalten wird, wobei das vorgegebene Kriterium erfüllt ist, wenn das Referenzbild einer Ansicht entspricht, die zum gleichen Zeitpunkt wie das aktuelle Bild aufgenommen wurde;
- wenn das Referenzbild das vorgegebene Kriterium erfüllt, Codieren (E32) einer Positionsinformation eines Vorhersageblocks des Referenzbildes, der zum Vorhersagen des aktuellen Blocks verwendet wird, gemäß einem ersten Codierungsmodus,
- wenn das Referenzbild das vorgegebene Kriterium nicht erfüllt, Codieren (E33) der Positionsinformation gemäß einem zweiten Codierungsmodus, wobei der erste und der zweite Codierungsmodus mindestens einen unterschiedlichen Codierungsparameter enthalten, wobei ein Codierungsparameter eines Codierungsmodus einem oder mehreren Syntaxelementen entspricht, die zur Signalisierung des Codierungsmodus verwendet werden, oder eine Methode zum Erstellen einer Liste von Bewegungsvektor-Vorhersagen zum Codieren eines Bewegungsvektors des Vorhersageblocks, oder einen entropischen Codierungskontext, der zum Codieren eines Syntaxelements des Codierungsmodus verwendet wird, oder eine Initialisierungswahrscheinlichkeit eines entropischen Codierungskontexts,
- Codieren (E34) des aktuellen Blocks ausgehend von mindestens dem Vorhersageblock.

9. Vorrichtung zum Codieren eines eine Bildsequenz darstellenden Datenstroms, die mindestens einen aktuellen Block eines aktuellen Bildes enthält, wobei die Bildsequenz ein stereoskopisches Video darstellt, das zu jedem Zeitpunkt eine linke und eine rechte Ansicht enthält, wobei die Bilder der Bildsequenz abwechselnd einer linken oder einer rechten Ansicht des stereoskopischen Videos entsprechen, wobei die Vorrichtung zum Codieren **dadurch gekennzeichnet ist, dass** sie Folgendes enthält:
- ein erstes Modul zum Codieren (CD1), das dazu ausgelegt ist, eine Information zu codieren, die es ermöglicht, während des Decodierens des aktuellen Blocks eine Information zu erhalten, die es ermöglicht, das Referenzbild aus einer Gruppe von Referenzbildern zu identifizieren,
- ein Modul zum Prüfen eines vorgegebenen Kriteriums anhand der jeweiligen Indizes des aktuellen Bildes und des Referenzbildes sowie einer Parität des Indexes des aktuellen Bildes, wobei der Index des Referenzbildes aus der Information erhalten wird, wobei das vorgegebene Kriterium erfüllt ist, wenn das Referenzbild einer Ansicht entspricht, die zum gleichen Zeitpunkt wie das aktuelle Bild aufgenommen wurde;
- ein zweites Modul zum Codieren (CD2), das dazu ausgelegt ist, wenn das Referenzbild das vorgegebene Kriterium erfüllt, eine Positionsinformation eines Vorhersageblocks des Referenzbildes, der zum Vorhersagen des aktuellen Blocks verwendet wird, gemäß einem ersten Codierungsmodus zu codieren,
- ein drittes Modul zum Codieren (CD3), das dazu ausgelegt ist, wenn das Referenzbild das vorgegebene Kriterium nicht erfüllt, die Positionsinformation gemäß einem zweiten Codierungsmodus zu codieren, wobei der erste und der zweite Codierungsmodus mindestens einen unterschiedlichen Codierungsparameter enthalten, wobei ein Codierungsparameter eines Codierungsmodus einem oder mehreren Syntaxelementen entspricht, die zur Signalisierung des Codierungsmodus verwendet werden, oder eine Methode zum Erstellen einer Liste von Bewegungsvektor-Vorhersagen zum Codieren eines Bewegungsvektors des Vorhersageblocks, oder einen entropischen Codierungskontext, der zum Codieren eines Syntaxelements des Codierungsmodus verwendet wird, oder eine Initialisierungswahrscheinlichkeit eines entropischen Codierungskontexts,
- ein viertes Modul zum Codieren (CD4), das dazu ausgelegt ist, einen aktuellen Block aus dem Vorhersageblock zu codieren.

10. Computerprogramm mit Anweisungen zum Umsetzen des Verfahrens zum Decodieren nach einem der Ansprüche 1 bis 6 oder zum Umsetzen des Verfahrens zum Codieren nach Anspruch 8, wenn das Programm von einem Prozessor ausgeführt wird.

11. Signal, das codierte Daten enthält, die eine Bildsequenz darstellen, wobei die Bildsequenz ein stereoskopisches Video darstellt, das zu jedem Zeitpunkt eine linke und eine rechte Ansicht enthält, wobei die Bilder der Bildsequenz abwechselnd einer linken oder einer rechten Ansicht des stereoskopischen Videos entsprechen, wobei das Signal für mindestens einen aktuellen Block eines Bildes der Bildsequenz codierte Daten des aktuellen Blocks enthält, wobei der aktuelle Block durch Vorhersage ausgehend von einem Vorhersageblock eines Referenzbildes codiert wird, wobei der Vorhersageblock im Referenzbild durch eine Positionsinformation identifiziert wird, wobei ein Index des Referenzbildes aus der Information erhalten wird, ein vorgegebenes Kriterium anhand der jeweiligen Indizes des aktuellen Bildes und des Referenzbildes sowie einer Parität des Indexes des aktuellen Bildes geprüft wird, wobei das vorgegebene Kriterium erfüllt ist, wenn das Referenzbild einer Ansicht entspricht, die zum gleichen Zeitpunkt wie das aktuelle Bild aufgenommen wurde; Wobei das Signal **dadurch gekennzeichnet ist, dass** es ferner eine Verwendungsinformation (ibc_flag) enthält, die angibt, ob ein erster Decodierungsmodus zum Decodieren der Positionsinformation des Vorhersageblocks verwendet werden soll, wenn das Referenzbild das vorgegebene Kriterium erfüllt, oder ob ein zweiter Decodierungsmodus verwendet werden soll, um die Positionsinformation des Vorhersageblocks zu decodieren, wenn das Referenzbild das vorgegebene Kriterium nicht erfüllt, wobei der erste und der zweite Decodierungsmodus mindestens einen unterschiedlichen Decodierungsparameter enthalten, der einem oder mehreren Syntaxelementen entspricht, die zur Signalisierung des Decodierungsmodus verwendet werden, oder eine Methode zum Erstellen einer Liste von Bewegungsvektor-Vorhersagen zum Decodieren eines Bewegungsvektors des Vorhersageblocks, oder einen entropischen Codierungskontext, der zum Codieren eines Syntaxelements des Decodierungsmodus verwendet wird, oder eine Initialisierungswahrscheinlichkeit eines entropischen Codierungskontexts.

## Claims

1. Method for decoding a data stream representative of an image sequence, **characterized in that** it comprises the following steps, for at least one current block of a current image of the image sequence, the image sequence being representative of a stereoscopic video comprising a left-hand view and a right-hand view at each instant in time, the images of the image sequence corresponding alternately to a left-hand view or a right-hand view of the stereoscopic video, said current block being encoded using a predictor block of a reference image, said predictor block being identified in the reference image by location information:
- obtaining (E350, E351) information for identifying the reference image from among a set of reference images,
- obtaining an index of the reference image from said information and verifying a predetermined criterion based on the respective indices of the current image and of the reference image and a parity of the index of the current image, said predetermined criterion being met when the reference image corresponds to a view of the same instant in time as the current image;
when the reference image meets the predetermined criterion, decoding (E370, E371) the location information in a first decoding mode,
- otherwise, decoding (E380, E381) the location information in a second decoding mode, the first and second decoding modes comprising at least one distinct decoding parameter corresponding to one or more syntax elements used to signal the decoding mode, or a way of constructing a list of motion vector predictors for decoding a motion vector of the predictor block, or else an entropy encoding context used to encode a syntax element of the decoding mode, or else a probability of initialization of an entropy encoding context,
- reconstructing (E390) the current block from the predictor block.

2. Decoding method according to Claim 1, wherein obtaining information for identifying the reference image from among a set of reference images comprises decoding an identifier of the reference image.

3. Decoding method according to Claim 1, wherein obtaining information for identifying the reference image from among a set of reference images comprises:
- decoding information indicating whether the location information is to be decoded in the first decoding mode or in the second decoding mode,
- when the location information is to be decoded in the first decoding mode, identifying the reference image by deducing the use of the first decoding mode,
- when the location information is to be decoded in the second decoding mode, identifying the reference image by decoding an identifier of the reference image from the data stream.

4. Decoding method according to any one of Claims 1 to 3, wherein the location information corresponds to a motion vector, and wherein the first decoding mode constructs a list of motion vectors comprising at least one of the following motion vectors:
- a motion vector pointing to a first block of the reference image that is spatially collocated with the current block of the current image,
- a motion vector pointing to a block of the reference image that is located above the first block,
- a motion vector pointing to a block of the reference image that is located to the left of the first block,
- a motion vector pointing to a block of the reference image that is located above and to the left of the first block,
- a motion vector pointing to a block of the reference image that is located to the right of the first block,
- a motion vector pointing to a block of the reference image that is located above and to the right of the first block,
- a motion vector pointing to a block of the reference image that is located below the first block,
- a motion vector pointing to a block of the reference image that is located below and to the right of the first block,
- a motion vector pointing to a block of the reference image that is located below and to the left of the first block.

5. Decoding method according to any one of Claims 1 to 3, wherein the decoding in the first decoding mode comprises the following steps:
- constructing a list of motion vectors,
- decoding, from the data stream, an index identifying the motion vector, from among the motion vectors in the list, to be used to identify the predictor block,
- decoding, from the data stream, information indicating whether a horizontal, respectively vertical, component of the identified motion vector is equal to zero,
- when the horizontal, respectively vertical, component of the identified motion vector is other than zero, assigning a value equal to 1 to the horizontal, respectively vertical, component.

6. Decoding method according to any one of Claims 1 to 3, wherein the decoding in the first decoding mode and the decoding in the second decoding mode use the same syntax elements to signal the motion vector to be used to identify the predictor block, the first decoding mode and the second decoding mode using distinct types of entropy decoding, or when the first decoding mode and the second decoding mode use the same type of entropy decoding, the same type of entropy decoding using contextual decoding, the first decoding mode and the second decoding mode use distinct decoding contexts.

7. Device for decoding a data stream representative of an image sequence comprising at least one current block of a current image, the image sequence being representative of a stereoscopic video comprising a left-hand view and a right-hand view at each instant in time, the images of the image sequence corresponding alternately to a left-hand view or a right-hand view of the stereoscopic video, said current block being encoded using a predictor block of a reference image, said predictor block being identified in the reference image by location information, the decoding device being **characterized in that** it comprises:
- an obtainment module (OBT) configured to obtain information for identifying the reference image from among a set of reference images,
- a module for verifying a predetermined criterion based on the respective indices of the current image and of the reference image and a parity of the index of the current image, the index of the reference image being obtained from said information, said predetermined criterion being met when the reference image corresponds to a view of the same instant in time as the current image;
- a first decoding module (DC1) configured, when the reference image meets the predetermined criterion, to decode the location information in a first decoding mode,
- a second decoding module (DC2) configured, when the reference image does not meet the predetermined criterion, to decode the location information in a second decoding mode, the first and second decoding modes comprising at least one distinct decoding parameter corresponding to one or more syntax elements used to signal the decoding mode, or a way of constructing a list of motion vector predictors for decoding a motion vector of the predictor block, or else an entropy encoding context used to encode a syntax element of the decoding mode, or else a probability of initialization of an entropy encoding context,
- a reconstruction module (REC) configured to reconstruct the current block from the predictor block.

8. Method for encoding a data stream representative of an image sequence, the image sequence being representative of a stereoscopic video comprising a left-hand view and a right-hand view at each instant in time, the images of the image sequence corresponding alternately to a left-hand view or a right-hand view of the stereoscopic video, **characterized in that** it comprises the following steps, for at least one current block of a current image of the image sequence:
- encoding (E30) information for obtaining, when the current block is decoded, information for identifying a reference image from among a set of reference images,
- computationally verifying a predetermined criterion based on the respective indices of the current image and of the reference image and taking into account a parity of the index of the current image, the index of the reference image being obtained from said information, said predetermined criterion being met when the reference image corresponds to a view of the same instant in time as the current image;
- when the reference image meets the predetermined criterion, encoding (E32) location information of a predictor block of the reference image used to predict the current block in a first encoding mode,
- when the reference image does not meet the predetermined criterion, encoding (E33) the location information in a second encoding mode, the first and second encoding modes comprising at least one distinct encoding parameter, an encoding parameter of an encoding mode corresponding to one or more syntax elements used to signal the encoding mode, or a way of constructing a list of motion vector predictors for encoding a motion vector of the predictor block, or else an entropy encoding context used to encode a syntax element of the encoding mode, or else a probability of initialization of an entropy encoding context,
- encoding (E34) the current block from at least the predictor block.

9. Device for encoding a data stream representative of an image sequence comprising at least one current block of a current image, the image sequence being representative of a stereoscopic video comprising a left-hand view and a right-hand view at each instant in time, the images of the image sequence corresponding alternately to a left-hand view or a right-hand view of the stereoscopic video, the encoding device being **characterized in that** it comprises:
- a first encoding module (CD1) configured to encode information for obtaining, when the current block is decoded, information for identifying a reference image from among a set of reference images,
- a module for verifying a predetermined criterion based on the respective indices of the current image and of the reference image and a parity of the index of the current image, the index of the reference image being obtained from said information, said predetermined criterion being met when the reference image corresponds to a view of the same instant in time as the current image;
- a second encoding module (CD2) configured, when the reference image meets the predetermined criterion, to encode location information of a predictor block of the reference image used to predict the current block in a first encoding mode,
- a third encoding module (CD3) configured, when the reference image does not meet the predetermined criterion, to encode the location information in a second encoding mode, the first and second encoding modes comprising at least one distinct encoding parameter, an encoding parameter of an encoding mode corresponding to one or more syntax elements used to signal the encoding mode, or a way of constructing a list of motion vector predictors for encoding a motion vector of the predictor block, or else an entropy encoding context used to encode a syntax element of the encoding mode, or else a probability of initialization of an entropy encoding context,
- a fourth encoding module (CD4) configured to encode a current block from the predictor block.

10. Computer program containing instructions for implementing the decoding method according to any one of Claims 1 to 6 or for implementing the encoding method according to Claim 8 when the program is executed by a processor.

11. Signal containing encoded data representative of an image sequence, the image sequence being representative of a stereoscopic video comprising a left-hand view and a right-hand view at each instant in time, the images of the image sequence corresponding alternately to a left-hand view or a right-hand view of the stereoscopic video, said signal comprising, for at least one current block of an image of the image sequence, encoded data of the current block, said current block being predictively encoded from a predictor block of a reference image, said predictor block being identified in the reference image by location information, an index of the reference image being obtained from said information, a predetermined criterion being verified based on the respective indices of the current image and of the reference image and a parity of the index of the current image, said predetermined criterion being met when the reference image corresponds to a view of the same instant in time as the current image;
the signal being **characterized in that** it furthermore comprises usage information (ibc_flag) indicating whether a first decoding mode should be used to decode the location information of the predictor block, when the reference image meets the predetermined criterion, or whether a second decoding mode should be used to decode the location information of the predictor block when the reference image does not meet the predetermined criterion, the first and second decoding modes comprising at least one distinct decoding parameter corresponding to one or more syntax elements used to signal the decoding mode, or a way of constructing a list of motion vector predictors for decoding a motion vector of the predictor block, or else an entropy encoding context used to encode a syntax element of the decoding mode, or else a probability of initialization of an entropy encoding context.
